# EUROPÄISCHE PATENTSCHRIFT

(11) **EP 2 795 713 B1**
(45) Veröffentlichungstag und Bekanntmachung des Hinweises auf die Patenterteilung: **05.07.2017**
(21) Anmeldenummer: 12809757.3
(22) Anmeldetag: 18.12.2012
(51) Int. Cl.: H01M 10/60

(54) **BATTERIEMODUL MIT BATTERIEMODULGEHÄUSE UND BATTERIEZELLEN**
BATTERY MODULE WITH BATTERY MODULE HOUSING AND BATTERY CELLS
MODULE DE BATTERIE DOTÉ D'UN BOÎTIER DE MODULE DE BATTERIE ET DE CELLULES DE BATTERIE

(30) Priorität: 21.12.2011 EP 11194916; 09.01.2012 US 201261584394 P; 09.01.2012 US 201261584383 P
(43) Veröffentlichungstag der Anmeldung: 29.10.2014
(73) Patentinhaber: Alevo International S.A., 1920 Martigny (CH)
(72) Erfinder: SCHRÖDER, Joachim, 50670 Köln (DE); BORCK, Markus, 70567 Stuttgart (DE)
(74) Vertreter: Durm & Partner
(86) Internationale Anmeldenummer: PCT/EP2012/075878
(87) Internationale Veröffentlichungsnummer: WO 2013/092543

(56) Entgegenhaltungen:
- EP-A1- 1 939 956
- EP-A1- 2 367 220
- WO-A1-2008/050211
- WO-A1-2013/037742
- DE-A1-102010 021 922
- US-A1- 2003 008 205
- US-A1- 2009 258 289

## Beschreibung

Die vorliegende Erfindung betrifft ein Batteriemodul umfassend ein Batteriemodulgehäuse mit Teilen aus Kunststoff und mehrere prismatische Batteriezellen, die ein Zellgehäuse mit vier Seitenwänden aufweisen.

Wiederaufladbare Batteriezellen sind auf vielen technischen Gebieten von großer Bedeutung. Sie werden häufig für Anwendungen eingesetzt, bei denen nur geringe Stromstärken benötigt werden, wie beispielsweise Mobiltelefone. Daneben gibt es einen hohen Bedarf an Batteriezellen für Hochstromanwendungen, insbesondere für den elektrischen Antrieb von Fahrzeugen. Gerade im Automobilbereich werden viele Batteriemodule eingesetzt, die aus mehreren prismatischen Batteriezellen bestehen, da diese Batteriezellen einen kompakten Aufbau des Batteriemoduls erlauben und den im Kraftfahrzeug zur Verfügung stehenden Raum bestmöglich ausnutzen.

Ein Batteriemodul umfasst eine Mehrzahl von Batteriezellen, die eine für die Zelle charakteristische Spannung liefern. Die Spannung ist abhängig von der verwendeten Materialkombination. Ein oder mehrere Batteriemodule, die elektrisch verschaltet sind, bilden eine Batterie. Um die Anforderungen an die Leistungs- und Energiemengen einer Batterie zu erfüllen, werden Batteriemodule aus mehreren Batteriezellen aufgebaut, die elektrisch in Serie und/oder parallel geschaltet werden.

Während des Betriebs einer Batterie entsteht Wärme, wobei die Wärmemenge unter anderem abhängig von der verwendeten Elektrolytlösung in der Batteriezelle ist. Im Stand der Technik sind mehrere wiederaufladbare Batterien bekannt, die ein Kühlen einer Batterie durch eine Kühlvorrichtung vorsehen. Beispielsweise werden in der US 2003/0017384 A1 Batteriezellen gezeigt, bei denen eine Metallplatte in die Seitenwand des Gehäuses integriert ist und an ein plattenförmiges Wärmeübertragungsteil angrenzt. Die EP 2 380 223 A1 sieht für eine Batterie mit Batteriezellen Wärmeleitelemente und Wärmeleitplatten in einem Gehäuse vor, wobei die Wärmeabführung aus den Batteriezellen über die Wärmeleiteinrichtungen erfolgt. Beispielsweise wird neben der Kühlung der Batteriezellen mittels Kühlplatten im Stand der Technik auch eine Flüssigkeitskühlung oder eine Luftkühlung vorgesehen, etwa in US 7,981,538 bzw. US 6,296,968 am Beispiel einer Nickel-Cadmium-Batterie und einer Nickel-Metallhydrid-Batterie beschrieben.

Im Stand der Technik sind auch Kühlplatten zwischen Batteriezellen bekannt, die mäanderförmige Kühlkanäle aufweisen. Die Kühlkanäle werden dabei durch eine gestanzte oder anders verformte erste Platte gebildet, wobei die offene Seite der Kanäle mit einer zweiten Platte verschlossen werden. Beide Platten habe die gleiche Stärke. Als geeignetes Material werden Metall oder Polymere vorgeschlagen. Eine derartige Ausführung ist beispielsweise in US 2009/0258289 A1 gezeigt.

Die WO 2008/050211 verwendet zur Kühlung von einzelnen Batteriezellen Platzhalterplatten (spacing plates), die so geformt sind, dass zwischen zwei benachbarten Batteriezellen Luft zur Kühlung hindurchströmen kann. In US 2003/0008205 A1 wird eine Kühlstruktur beschrieben, die zwischen zwei benachbarten Batteriezellen mehrere dreieckig geformte Wandstücke aufweist, die eine zickzackartige Innenstruktur zwischen zwei im Wesentlichen parallelen Wänden bilden. Durch die sich ergebenden Lufträume kann Luft zur Kühlung strömen. Die verwendeten Wände sowie die zickzackförmige Innenstruktur bestehen jeweils aus gleich starken Platten.

Wiederaufladbare Lithium-Batteriezellen sind in der Praxis nahezu ausschließlich Lithium-Ionen-Zellen. In der Regel besteht die negative Elektrode aus Graphit, der auf einem Kupferableitmaterial aufgebracht wird. Die positive Elektrode basiert in der Regel auf Lithium-Kobalt-Oxid, das einen Aluminiumableiter besitzt. Der Transport der Ionen innerhalb der Zelle erfolgt mittels der Elektrolytlösung, die die lonenbeweglichkeit gewährleistet. Die Elektrolytlösung besteht in der Regel aus einem Lithium-Salz, das in einem organischen Lösungsmittel oder Lösungsmittelgemisch gelöst ist. Derartige organische Lithium-Ionen-Zellen sind bezüglich ihrer Sicherheit kritisch, da das organische Lösungsmittel der Elektrolytlösung brennbar ist und einen niedrigen Flammpunkt besitzt, so dass eine Temperaturerhöhung innerhalb der Zelle vermieden werden muss. Dies gilt insbesondere bei Batterien für Hochstromanwendungen. Um solche Risiken zu vermeiden, werden bei Lithium-Ionen-Zellen Maßnahmen hinsichtlich der exakten Regelung der Lade- und Entladevorgänge sowie bei der Batteriekonstruktion ergriffen. Zusätzlich erfolgt häufig eine Kühlung der Batterie.

Trotz der Bemühungen im Stand der Technik, wiederaufladbare Batteriemodule für Hochstromanwendungen zu optimieren und die zum Teil gegenläufigen Forderungen zu erfüllen, besteht nach wie vor das Bedürfnis nach einem verbesserten Batteriemodul, das insbesondere folgenden Anforderungen gerecht wird:
- sehr gute elektrische Leistungsdaten, insbesondere hohe Energiedichte bei hohen entnehmbaren Strömen
- Verbesserung der Sicherheit, auch unter den besonderen Randbedingungen in einem Fahrzeug
- geringes Gewicht, um eine hohe Leistungsdichte pro Gewichtseinheit (Kilogramm) zu erzielen
- kompakter Aufbau, um möglichst viel elektrische Energie pro Volumeneinheit zur Verfügung zu stellen
- hohe mechanische Stabilität des Batteriemodulgehäuses
- geringer Preis durch kostengünstige Materialien und möglichst einfache Produktionsverfahren

Die im Stand der Technik bekannten Probleme werden erfindungsgemäß durch ein Batteriemodul mit den Merkmalen des Anspruchs 1 gelöst. Dabei wurde erkannt, dass neben der Kühlung auch das Gehäuse und seine Stabilität eine entscheidende Rolle spielen.

Erfindungsgemäß umfasst das Batteriemodul ein Batteriemodulgehäuse mit Teilen aus Kunststoff und mehrere prismatische Batteriezellen. Die Batteriezellen weisen ein Zellgehäuse mit vier bevorzugt metallenen Seitenwänden auf, von denen zwei parallele Seitenwände größer als die beiden anderen Seitenwände sind. Das Zellgehäuse der Batteriezelle verhindert, dass der Elektrolyt oder das darin enthaltene Lösungsmittel flüssig oder gasförmig aus der Zelle entweicht. Im Gegensatz kann bei Zellen mit einem festen Elektrolyten (engl. solid electrolyte) auf ein Zellgehäuse verzichtet werden. Die Batteriezellen umfassen eine Elektrolytlösung, die bevorzugt auf SO₂ basiert. Derartige Batteriezellen mit einem auf SO₂ basierenden Elektrolyten sind zum Beispiel in der WO 2011/098233 beschrieben. Bevorzugt enthält wenigstens die positive Elektrode ein aktives Material einer Zusammensetzung, die Lithium einschließt.

Das Batteriemodulgehäuse schließt ein Kühlsystem mit einer Kanalstruktur und einem fluiden Kühlmittel ein. Das Kühlmittel kann also sowohl ein Gas wie auch eine Kühlflüssigkeit sein. Nachfolgend wird ohne Einschränkung der Allgemeinheit des Kühlfluids der Begriff Kühlflüssigkeit verwendet. Das Batteriemodulgehäuse weist mindestens einen Kühlmitteleinlass und mindestens einen Kühlmittelauslass auf, die in Fluidverbindung mit der Kanalstruktur des Kühlsystems stehen. Bevorzugt weist das Batteriemodulgehäuse genau einen Kühlmitteleinlass und genau einen Kühlmittelauslass auf. Bevorzugt beginnt die Kanalstruktur am Kühlmitteleinlass und endet am Kühlmittelauslass des Gehäuses.

Das Batteriemodul ist derart aufgebaut, dass zwischen zwei benachbarten Batteriezellen eine Zwischenwand aus Kunststoff positioniert ist, die im Wesentlichen parallel zu den größeren Seitenwänden der Batteriezellen angeordnet ist. Ein Kanal der Kanalstruktur verläuft wenigstens teilweise in der Zwischenwand und ist mittels einer Ausnehmung der Zwischenwand gebildet. Die Ausnehmung der Zwischenwand ist mindestens zu einer benachbarten Seitenwand der Batteriezellen hin offen. Die Ausnehmung der Zwischenwand entsteht dadurch, dass aus der ursprünglichen Zwischenwand Material entfernt wird. So wird ein einseitig oder beidseitig offener Kanal gebildet. Im Bereich der Ausnehmung ist die Dicke der Zwischenwand reduziert gegenüber den Bereichen, die nicht von der Ausnehmung gebildet sind. Bei einer beidseitig offenen Ausnehmung ist kein Material mehr vorhanden. Der Begriff Ausnehmung der Kanalstruktur ist in diesem Sinne zu verstehen.

Zwischen der Seitenwand der Batteriezelle und der Zwischenwand ist eine Kunststofftrennschicht angeordnet. Ihr Material ist bevorzugt verschieden von dem Material der Zwischenwand. Die Dicke der Kunststofftrennschicht ist geringer als die Dicke der Zwischenwand. Die Kunststofftrennschicht ist derart angeordnet, dass der mittels der Ausnehmung gebildete Kanal des Kühlsystems in der Zwischenwand durch die Kunststofftrennschicht geschlossen ist. Auf diese Weise wird verhindert, dass in dem Kanal der Kanalstruktur fließendes Kühlmittel aus dem Kanal austritt und direkt in Kontakt mit der Seitenwand der Batteriezelle kommt, die bevorzugt aus Metall besteht. Damit wird sichergestellt, dass keine Schädigung der metallenen Seitenwand der Batteriezelle durch das Kühlmittel erfolgt. Die Auswahl des Kühlmittels kann unabhängig von ihrer Reaktion mit Metallen erfolgen.

In einer bevorzugten Ausführungsform umfasst die Zwischenwand Elemente oder Mittel, um die benachbarte Batteriezelle in ihrer Position zu fixieren und zu halten. Beispielsweise können diese Elemente Halterungen sein, die eine definierte Relativposition zwischen Zwischenwand und Batteriezelle herstellen. Erfindungsgemäß weist die Zwischenwand dazu einen Zwischenwandboden auf, der sich wenigstens teilweise unter eine an der Zwischenwand angeordnete Batteriezelle erstreckt. Ebenfalls bevorzugt kann die Zwischenwand zusätzlich oder alternativ eine Zwischenwandoberseite aufweisen, die sich wenigstens teilweise über die Oberseite des Batteriezellengehäuses einer benachbarten Batteriezelle erstreckt. Ebenso bevorzugt kann zusätzlich oder optional eine Zwischenwandseitenwand der Zwischenwand zur Positionierung der Batteriezelle dienen. Daneben kann eine Seitenwand des Mittelteils der Zwischenwand oder eine Seitenwand des Verteilbereichs der Zwischenwand als Positionierhilfe und Halterung für eine Batteriezelle dienen- In dem Verteilbereich werden der Verteilkanal und der Sammelkanal sowie eine Durchgangsausnehmung für eine Spannvorrichtung geführt. Die als Verteilbereichsseitenwand bezeichnete Wand kann gemeinsam mit der Zwischenwandseitenwand die Batteriezelle in ihrer horizontalen Position fixieren und halten. Die Zwischenwandoberseite kann gemeinsam mit dem Zwischenwandboden die Batteriezelle in ihrer vertikalen Position fixieren und halten. Bevorzugt weist die Oberseite der Zwischenwand eine Ausnehmung auf, damit die elektrischen Anschlüsse der Batteriezelle zugänglich sind. Selbstverständlich können auch nur Teile der Wände, der Oberseite oder des Bodens als Halteelemente dienen.

Die Zwischenwandseilenwand, die Verteilbereichsseitenwand, der Zwischenwandboden und die Zwischenwandoberseite bilden bevorzugt gemeinsam eine rahmenförmige Hallestruktur, die an die Batteriezellen angepasst ist. In einer bevorzugten Ausführungsform ist diese rahmenförmige Haltestruktur sowohl an der Vorderseite als auch an der Rückseite der Zwischenwand angeordnet. Wird eine Batteriezelle zwischen zwei Zwischenwänden positioniert, so wird sie bevorzugt vollständig von den Zwischenwänden und den vorgesehenen Haltestrukturen umschlossen. Hierdurch wird nicht nur eine zuverlässige und definierte Halterung der Batteriezelle ermöglicht, sondern gleichzeitig auch eine Isolierung des Batteriezellgehäuses gegenüber der Umgebung. Das Batteriezellgehäuse aus Metall hat somit keinen Kontakt zur Umgebung des Batteriegehäuses.

Folglich erfüllt die Zwischenwand mehrere Aufgaben gleichzeitig, nämlich die Isolierung der Batteriezelle gegenüber der Umgebung und die Halterung der Batteriezelle in einer definierten Position. Darüber hinaus bilden mehrere Zwischenwände gemeinsam einen Teil des Batteriegehäuses. Insbesondere werden wenigstens Teile der Batteriegehäuseseitenwand durch die Zwischenwandseitenwände gebildet. Zusätzlich wird eine effiziente Kühlung der Batteriezellen gewährleistet.

Die Anordnung von Teilen des Kühlsystems in den Zwischenwänden hat den Vorteil, dass das Kühlmittel sehr nah an die Batteriezellen gebracht wird. Dabei ist eine großflächige Kühlung möglich, so dass die Temperatur der Batteriezellen sehr effektiv und effizient gesenkt werden kann. Die Dicke der Kunststofftrennschicht zwischen der Seitenwand der Batteriezelle und der Zwischenwand ist deshalb bevorzugt deutlich geringer als die Dicke der Zwischenwand, um einen möglichst guten Wärmeübergang von der gut wärmeleitenden Batteriezellenseitenwand zu dem fluiden Kühlmittel im Kanal der Zwischenwand zu gewährleisten.

Der Dampfdruck von Elektrolytlösungen, die auf SO₂ basieren, ist vom Anteil an SO₂, den die Elektrolytlösung enthält, und von der Temperatur abhängig. Bei Batteriezellen, die eine solche Elektrolytlösung enthalten, stellt sich das Problem, dass sich der Druck in der Batteriezelle bei Temperaturerhöhung erhöht, was zu einer Ausdehnung des Batteriezellengehäuses führt. Deshalb ist eine besonders wirkungsvolle Kühlung derartiger Batteriezellen besonders notwendig.

Auch die Ausdehnung bzw. Dickenzunahme der Elektroden während des Betriebs (engl.: Swelling) ist ein Problem von Batteriezellen wie z.B. von organischen Lithium-Polymer-Zellen. Auch bei Batteriezellen mit einer auf SO₂ basierenden Elektrolytlösung ist dieses Phänomen zu beobachten. Neben der Kühlung soll die Batteriekonstruktion auch diesem Verhalten durch die Aufnahme des inneren Drucks entgegen wirken. Dies kann beispielsweise durch eine Spannvorrichtung, ein Spannband, verstärkte Seitenwände oder Gehäusewände, wie eine verstärkte Endwand, oder durch druckstabile Zwischenwände erfolgen.

Für einen bestmöglichen Wärmeübergang ist die Dicke der Kunststofftrennschicht deutlich geringer als die Dicke der Zwischenwand. Bevorzugt beträgt die Dicke der Kunststofftrennschicht höchstens 20 % der Dicke der Zwischenwand. Im Rahmen der Erfindung wurde erkannt, dass eine Dicke der Kunststofftrennschicht von höchstens 10 %, bevorzugt höchstens 5 %, sehr bevorzugt höchstens 1 % der Dicke der Zwischenwand zu einem besonders guten Wärmeübergang führt. Weitere Untersuchungen haben gezeigt, dass die Dicke der Kunststofftrennschicht bevorzugt höchstens 1 mm betragen soll. Eine Kunststofftrennschicht von höchstens 0,5 mm, weiter bevorzugt höchstens 0,1 mm, sehr bevorzugt höchstens 0,01 mm Dicke verbessert den Wärmeübergang weiter. Dabei hat sich auch gezeigt, dass die Kunststofftrennschicht vorzugsweise aus Polyamid bestehen sollte. Kunststoffe aus Polyamiden (PA) lassen sich sehr gut zu halbtransparenten Folien verarbeiten. Der Werkstoff zeichnet sich durch eine große Hitzebeständigkeit sowie durch elektrische Isoliereigenschaften aus. Vorzugsweise wird das Produkt Polyamid PA66 verwendet.

Vorzugsweise ist die Dicke der Zwischenwand deutlich größer als die Dicke der Kunststofftrennschicht. Bevorzugt beträgt die Dicke der Zwischenwand höchstens 20 mm, besonders bevorzugt höchstens 10 mm und weiter bevorzugt höchstens 7 mm. Untersuchungen haben gezeigt, dass die Dicke der Zwischenwand bevorzugt weiter reduziert werden kann, so dass sie bevorzugt höchstens 5 mm, besonders bevorzugt höchstens 4 mm beträgt. Insbesondere ist eine Dicke von 3 mm bevorzugt. Eine Reduzierung der Zwischenwanddicke auf weniger als 1 mm ist nicht sinnvoll. Vorzugsweise sollte die Dicke der Zwischenwand nicht weniger als 2 mm sein. Je dünner die Zwischenwand realisiert werden kann, desto höher ist die Packdichte innerhalb des Batteriemoduls, d. h. bei dünneren Zwischenwänden können in dem gleichen Volumen mehr Batteriezellen in einem Batteriemodulgehäuse zusammengefasst werden. Eine dünne Zwischenwand führt folglich zu einer besseren Ausnutzung des Volumens des Batteriemodulgehäuses.

Allerdings kann die Zwischenwand nicht beliebig dünn werden, da sie zum einen den auftretenden Kräften, insbesondere bei Batteriezellen, die auf SO₂ basieren, standhalten müssen. Außerdem muss gewährleistet sein, dass genügend Kühlfluid transportiert werden kann, um eine geforderte Wärmeleistung zu realisieren. Hierzu kann der im Querschnitt abgerundete oder eckige Kanal unterschiedliche Querschnitte aufweisen. Beispielsweise sollten bevorzugt mindestens ein Liter Kühlflüssigkeit pro Minute fließen können, sehr bevorzugt ist eine Fließgeschwindigkeit von mindestens 1,5 I/min, weiter bevorzugt von mindestens 1,6 I/min. Dazu muss die Kanalstruktur in der Zwischenwand entsprechend ausgebildet sein. Untersuchungen an einem Batteriemodul mit 12 Zellen, die in zwei Reihen angeordnet sind, haben beispielsweise ergeben, dass eine Fließgeschwindigkeit von mindestens 2,25 I/min besonders vorteilhaft ist. Allgemein wurde im Rahmen der Erfindung erkannt, dass eine Fließgeschwindigkeit von mindestens 0,125 I/min pro Batteriezelle vorteilhaft ist, besonders bevorzugt eine Fließgeschwindigkeit von mindestens 0,18 I/min pro Batteriezelle.

Das Fluid dient zum Wärmetransport zur oder von der Oberfläche der Batteriezellen. Die Art des Fluids (gasförmig, flüssig, Wärmekapazität), die Einlasstemperatur und die Fließgeschwindigkeit müssen dem Wärmehaushalt der Batteriezelle angepasst werden. Der Wärmehaushalt hängt ab von der elektrischen Belastung, der Zellgeometrie und den Wärmekapazitäten der verwendeten Zellmaterialien. Bei geringer elektrischer Belastung kann die Zelle mittels eines gasförmigen Kühlmediums, z.B. Luft, gekühlt werden. Bei hohen Belastungen ist die Kühlung mit einem flüssigen Kühlmedium bevorzugt.

Bevorzugt ist die Zwischenwand aus Kunststoff, besonders bevorzugt aus einem dunkelfarbigen Kunststoff, wie z.B. PA6T/6I. Die Kunststofftrennschicht, die bevorzugt aus einer halbtransparenten PA66-Folie besteht, kann dann mittels eines Laserschweißverfahrens auf die Zwischenwand aufgeschweißt werden. Die Kunststofftrennschicht und die Zwischenwand werden derart miteinander verbunden, dass die offenen Seiten der Ausnehmungen in der Zwischenwand verschlossen sind, bevorzugt je nach Art des Fluids flüssigkeitsdicht und/oder gasdicht verschlossen.

In einer bevorzugten Ausgestaltung des erfindungsgemäßen Batteriemoduls ist der Kunststoff der Zwischenwand thermoplastisch. Die Zwischenwand lässt sich dann im Spritzgießverfahren herstellen, so dass die Kanäle der Kanalstruktur in nahezu beliebigen Formen direkt in die Zwischenwand eingearbeitet werden können.

Die Ausnehmung kann bevorzugt mäanderförmig in der Zwischenwand ausgebildet werden. Der Mäander erstreckt sich von einem unteren Bereich der Zwischenwand bis in einen oberen Bereich. Auf diese Weise wird eine relativ große Kühlfläche erzeugt, die an die Seitenwand der Batteriezellen grenzt und von Kühlmittel durchflossen ist. Dennoch bleibt die Stabilität der Zwischenwand erhalten.

Besonders bevorzugt weist der Mäander des Kanals in Flussrichtung des Kühlmediums enger werdende Mäanderschlaufen auf. Bevorzugt sind die Mäanderschlaufen im oberen Bereich der Zwischenwand enger, so dass die für einen Wärmeübergang zur Verfügung stehende Fläche nach oben hin erhöht wird. Dadurch kann auch im oberen Bereich eine gute Kühlung erzielt werden, wenn das Kühlmittel auf seinem Weg in Flussrichtung schon erwärmt wurde, da es im unteren Bereich der Zwischenwand bereits Wärme von den benachbarten Batteriezellen aufgenommen hat. Durch geeignete Wahl der Anzahl, der Länge und des Abstands der Mäanderschlaufen lässt sich eine gute und gleichmäßige Kühlung der Batteriezellen über ihre gesamte Seitenfläche erzielen. Die Mäander können auch gleichförmig ausgebildet sein, so dass die Mäanderschlaufen gleich sind bzw. den gleichen Abstand zueinander haben.

In einer bevorzugten Ausführungsform ist in der Zwischenwand eine Ausnehmung der Kanalstruktur vorgesehen, die sich über die gesamte Dicke der Zwischenwand erstreckt. Die Ausnehmung bildet einen beidseitig offenen Kanal, der zu den beiden benachbarten Seitenwänden der Batteriezellen hin offen ist. Somit erfolgt eine effiziente Kühlung beider benachbarter Batteriezellen. Die Zwischenwand ist in diesem Fall an der Vorderseite und der Rückseite mit einer Trennschicht ausgestattet, um die Ausnehmung an beiden Seiten zu verschließen, damit kein Kühlmittel austreten kann.

In einer alternativen, sehr bevorzugten Ausführungsform ist die Ausnehmung der Kanalstruktur als einseitig offener Kanal ausgebildet und nur zu einer der benachbarten Batteriezellen hin offen. Bevorzugt umfasst die Zwischenwand eine zweite Ausnehmung der Kanalstruktur, die einen weiteren einseitig offenen Kanal bildet, der zu der gegenüberliegenden Längsseite der Zwischenwand offen ist. Bevorzugt sind die zwei jeweils zu gegenüberliegenden Seiten hin offenen Kanäle versetzt zueinander angeordnet. Diese Kanäle können ebenfalls beide mäanderförmig ausgebildet sein.

In einer besonderen Ausführungsform des erfindungsgemäßen Batteriemoduls ist der in Fluidverbindung mit dem Kanal in der Zwischenwand stehende Kühlmitteleinlass unterhalb des Kühlmittelauslasses angeordnet. Besonders bevorzugt ist der Kühlmitteleinlass in der unteren Hälfte des Batteriemodulgehäuses positioniert. Besonders bevorzugt weist der Kühlmitteleinlass und/oder der Kühlmittelauslass eine Schnellkupplung auf. Sie ermöglicht ein einfaches und werkzeuglos betätigbares Anschließen des Batteriemoduls an ein externes Kühlsystem. Eine derartige Schnellkupplung kann beispielsweise ähnlich den gängigen Druckluftanschlüssen ausgebildet sein. Sowohl die Schnellkupplung als auch das an einem Schlauch angeordnete Gegenstück sind bevorzugt aus Metall und lassen sich durch einfaches Ineinanderstecken dichtend miteinander verbinden. Im praktischen Einsatz sind ein schneller Austausch und eine einfache Montage des Batteriemoduls möglich. Da kein spezielles Werkzeug vorgesehen ist, kann das Kühlsystem leicht abgekoppelt werden. Eine weitere Möglichkeit einer Schnellkupplung ist beispielsweise eine Schnellkupplung KV2 von SMC Corporation of America oder eine Ausführung ähnlich eines Bajonettverschlusses. Die Schnellkupplung ist stets werkzeuglos zu bedienen und erfordert kein Verschrauben über mehrere Gewindegänge.

In einer bevorzugten Ausführungsform ist der Kunststoff der Batteriemodulgehäuseteile faserverstärkt, besonders bevorzugt glasfaserverstärkt. Als besonders bevorzugt hat sich ein glasfaserverstärkter Polyamid erwiesen. Ein bevorzugtes Material ist beispielsweise das Polyamid PA 6T/6I. Derartige Materialien erfüllen die Forderung nach einem leichten, nicht leitenden beständigen Gehäusematerial sehr gut. Sie haben ein geringes Gewicht bei einer gleichzeitig sehr hohen Stabilität. Durch die glasfaserverstärkten Kunststoffe werden die mechanischen Eigenschaften nochmals erhöht, so dass insbesondere die sogenannte Impact-Strength deutlich verbessert wird, was zu einer Erhöhung der Sicherheit beim Einsatz in Fahrzeugen führt. Im Falle eines Zusammenstoßes oder Unfalls, beispielsweise bei einem Frontalcrash, wird diese Batterie meist nicht beschädigt, insbesondere bleiben die in dem Batteriemodulgehäuse umfassten Batteriezellen in der Regel unversehrt.

Daneben hat das glasfaserverstärkte Polyamid den Vorteil, dass es nicht nur Schutz gegen Kräfte von außen, sondern auch gegen die bei Batteriezellen, die insbesondere auf SO₂ basieren, auftretenden internen Drücke bietet. Da sich derartige Batteriezellen während des Lade- und Entladevorgangs erwärmen und ausdehnen, bietet ein glasfaserverstärktes Batteriemodulgehäuse gleichzeitig auch eine mechanische Stabilität gegenüber diesen Drücken, so dass das Gehäuse die entsprechenden Kräfte wenigstens teilweise aufnehmen kann.

Die Steifigkeit und Stabilität des Batteriemodulgehäuses wird bevorzugt auch dadurch erhöht, dass die Endwände des Batteriemodulgehäuses mit einer rippenartigen Struktur versehen sind. Die Vorderwand und die Rückwand, die im Wesentlichen parallel zu den größeren Seitenwänden der Batteriezellen angeordnet sind, weisen bevorzugt Quer- und/oder Längsstreben auf. Sie können beispielsweise sich horizontal und vertikal an der Außenseite der Wände erstreckende Rippen sein und eine netzartige Versteifungsstruktur bilden.

In einer bevorzugten Ausführungsform sind die Endwände des Batteriemodulgehäuses zweiteilig ausgebildet. Eine Endwand umfasst dann eine Abschlusswand, die zur äußeren Batteriezelle des Gehäuses benachbart ist, und eine Außenwand, die die Vorderwand bzw. Rückwand des Batteriegehäuses bildet. Die Abschlusswand weist bevorzugt eine einseitig offene Ausnehmung auf, die an der der Batteriezelle zugewandten Seite mit einer Kunststofftrennschicht abgedichtet ist. An der der Batteriezelle abgewandten Seite ist die Abschlusswand bevorzugt im Wesentlichen plan ausgebildet. Sie kann Ausnehmungen, Aufnahmen, Vorsprünge oder ähnliche strukturelle Elemente aufweisen, um ihre Relativposition zu der Außenwand zu sichern. Die Außenwand weist dann an ihrer Innenseite die korrespondierenden Elemente auf, um mit den Positionierelementen der Abschlusswand in Eingriff kommen zu können. Die Abschlusswand und/oder die Endwand können jeweils auch Halteelemente zur Positionierung und Halterung einer Batteriezelle aufweisen. Diese Halteelemente können ähnlich wie bei den Zwischenwänden beispielsweise wenigstens von Teilen der jeweiligen Seitenwände, des Bodens, der Oberseite und/oder einer Verteilbereichsseitenwand und/oder den jeweiligen strukturellen Elementen (Seitenwand, Boden, etc.) gebildet werden.

Die Innenseite der Außenwand ist ebenfalls im Wesentlichen plan, bis auf die korrespondierenden Positionierelemente, die fakultativ sind. Darüber hinaus kann sie - ebenso wie die Abschlusswand - selbstverständlich eine Durchgangsausnehmung, einen Verteilkanal und/oder einen Sammelkanal aufweisen. An der Außenseite der Außenwand können Versteifungselemente angeordnet sein, die durch Streben oder ähnliche Elemente gebildet sein können. Bei der zweiteiligen Ausführung der Endwand ist die Außenwand bevorzugt aus Kunststoff oder Metall ausgebildet, besonders bevorzugt aus Aluminium. Andere Metallarten sind möglich, beispielsweise Aluminiumguss oder Ähnliches. Hierdurch wird die Steifigkeit der Außenwand erhöht. Optional kann die Außenwand an ihrer Außenseite Ausnehmungen vorsehen, beispielsweise Sacklöcher oder schlitzartige sackförmige Ausnehmungen. Hierdurch wird die Stabilität nicht beeinträchtigt, es kann jedoch Gewicht eingespart werden.

In der Außenwand oder Endwand des Batteriegehäuses sind bevorzugt der Kühlmitteleinlass und der Kühlmittelauslass angeordnet. Diese können eine Schnellkupplung oder andere Kupplungen aufnehmen, um ein Kühlmittelsystem anzuschließen und dichtend den Kühlmittelkreislauf zu schließen. Bevorzugt sind die Anschlüsse für den Kühlmitteleinlass und den Kühlmittelauslass sowohl an der vorderen als auch an der hinteren Außenwand oder Endwand angeordnet. Auf diese Weise ist es möglich, mehrere Batteriegehäuse fluidisch miteinander zu koppeln und das Kühlsystem auf mehrere Batterien zu erweitern. Wird die Batterie einzeln verwendet (Stand-Alone-Variante), werden in diesem Fall ein Kühlmitteleinlass und ein Kühlmittelauslass durch einen Verschluss dichtend verschlossen. Dies kann beispielsweise ein Stopfen oder Ähnliches sein. Bevorzugt sind der Kühlmitteleinlass und der Kühlmittelauslass an gegenüberliegenden Wänden der Batterie angeordnet. In diesem Fall ist an jeder Außenwand oder Endwand des Batteriegehäuses entweder der Kühlmitteleinlass oder der Kühlmittelauslass mit einem Verschluss verschlossen. Die entsprechende andere Seite weist den Verschluss an dem jeweils andere Einlass bzw. Auslass auf.

Um die Aufnahme von ausgeübten Drücken weiter zu verbessern, werden in einer bevorzugten Ausführungsform des erfindungsgemäßen Batteriemoduls mehrere Batteriezellen und die dazwischen angeordneten Zwischenwände von einer Spannvorrichtung umfasst. Bevorzugt ist die Spannvorrichtung aus Metall. Die Spannvorrichtung unterstützt das glasfaserverstärkte Gehäuse, um ein Ausdehnen der Batteriezellen und somit des gesamten Batteriemoduls zu verhindern.

Besonders bevorzugt schließt die Spannvorrichtung ein Spannband, insbesondere ein Metall-Spannband ein. Es ist leicht zu montieren und leicht zu handhaben und weist gleichzeitig ein relativ geringes Gewicht auf. Darüber hinaus ist ein Spannband flexibel und an verschiedene Gehäuseformen anpassbar, was insbesondere bei einem modularen Aufbau des Batteriemoduls vorteilhaft ist. Besonders bevorzugt wird das Spannband laserverschweißt, so dass die beiden Enden das Band verschließen. Die Enden können sich überlappen, so dass eine ausreichend große Fläche zum Verschweißen entsteht. In einer weiter bevorzugten Ausführungsform wird das Spannband mittels eines selbsthaltenden Schnellverschlusses verschlossen. Als besonders bevorzugt hat sich ein selbstrastender Schnellverschluss erwiesen, so dass das Spannband auf einfache Weise manuell oder mittels eines Werkzeugs, wie beispielsweise einer Spannzange gespannt werden kann.

Wenn die Batteriezellen in dem Batteriemodul in zwei Reihen (Stapel) angeordnet sind, kann je ein Spannband eine Reihe der Batteriezellen sowie die entsprechenden Gehäuseteile umgreifen. Bevorzugt weist das Batteriemodulgehäuse eine Durchgangsausnehmung zwischen den Batteriezellreihen (Stapel) auf, durch die das Spannband hindurchgeführt wird. Das Spannband kann auch zweifach durch die Durchgangsausnehmung geführt werden, z. B. in Form einer Acht. So können beide Reihen mit einem Band umspannt werden. Zusätzlich kann ein weiteres Spannband um das gesamte Batteriemodul gespannt sein.

In einer bevorzugten Ausführungsform ist das Batteriemodul modular aufgebaut. Da das Batteriemodul je nach geforderter Leistungsdichte und Spannungsniveau mehrere zusammengeschaltete Batteriezellen einschließt, variiert die Größe des Batteriemodulgehäuses in Abhängigkeit der Anzahl der Batteriezellen. Bevorzugt weisen deshalb die Zwischenwände an ihren kurzen seitlichen Stirnseiten je eine Zwischenwandseitenwand auf, die die kleinen Seitenwände des Batteriezellgehäuses wenigstens teilweise überragen. Bevorzugt bilden die Zwischenwandseitenwände gemeinsam mit anderen Zwischenwänden und deren Zwischenwandseitenwänden eine Batteriemodulgehäuseseitenwand. Besonders bevorzugt korrespondieren die jeweiligen Zwischenwandseitenwände miteinander, so dass sie ineinander greifen und besonders bevorzugt miteinander verrasten.

Erfindungsgemäß weist die Zwischenwand einen Zwischenwandboden auf, der wenigstens teilweise unter die Batteriezellen ragt und gemeinsam mit anderen Zwischenwandböden bevorzugt den Boden des Batteriemodulgehäuses bildet. Bevorzugt korrespondieren die Zwischenwandböden derart miteinander, dass sie ineinander greifen und besonders bevorzugt miteinander verrasten. Auf diese Weise können durch Hinzufügen weiterer Zwischenwände sowohl der Boden als auch die Seitenwände des Batteriemodulgehäuses vergrößert werden. Es ist nur ein Bauelement, nämlich die Zwischenwand, notwendig, um sowohl den Boden wie auch die Seitenwand des Batteriemodulgehäuses zu verlängern. Durch die korrespondierende Form ist eine einfache Montage möglich. Gleichzeitig werden durch die miteinander verrastenden Zwischenwände die dazwischen liegenden Batteriezellen gehalten. Die Stabilität des Batteriemodulgehäuses wird weiter erhöht.

Ein derartiges erfindungsgemäßes Batteriemodul wird bevorzugt in einem Kraftfahrzeug verwendet, da sie in verbesserter Weise die im Stand der Technik geforderten Anforderungen erfüllt. Zum einen erfolgt eine optimierte Kühlung der Batteriezellen, um eine Temperaturerhöhung der Zellen zu vermeiden. Zum anderen bietet sie eine erhöhte Stabilität und Sicherheit. Da die Kühlung ein starkes Ansteigen der Batterietemperatur verhindert, wird auch eine Ausdehnung der Batteriezellen mit auf SO₂ basierender Elektrolytlösung reduziert oder verhindert. Um dennoch eventuell entstehende Kräfte aufzufangen, ist das Batteriemodulgehäuse glasfaserverstärkt. Die Verrastung der Zwischenwände erhöht die Stabilität und gibt die Möglichkeit, die während des Betriebs entstehenden Kräfte aufzunehmen. Zusätzlich kann eine Spannvorrichtung, beispielsweise in Form eines Spannbandes vorgesehen sein. Dennoch ist das Batteriemodul insgesamt nicht nur sehr stabil, sondern weist auch ein recht geringes Gewicht auf. Durch die Verwendung der ein- oder beidseitig offenen Ausnehmungen in der Zwischenschicht und dem Abdichten der dadurch entstehenden Kanäle mittels der dünnen Kunststofftrennschicht wird der Platz innerhalb des Batteriemodulgehäuses bestmöglich ausgenutzt, so dass die Leistungsdichte pro Volumeneinheit deutlich erhöht werden kann. Dies erfolgt bei gleichzeitiger Erhöhung der Leistungsdichte pro Gewicht.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar.

Es zeigen:
- Fig. 1: das erfindungsgemäße Batteriemodul in einer Gesamtansicht mit abgehobenem Deckel;
- Fig. 2a - 2c: eine Zwischenwand, die zwischen zwei benachbarten Batteriezellen angeordnet ist;
- Fig. 3: eine Rückwand des Batteriemodulgehäuses des Batteriemoduls aus Figur 1;
- Fig. 4: eine Vorderwand des Batteriemodulgehäuses des Batteriemoduls aus Figur 1;
- Fig. 5: eine Gesamtansicht der Batterie mit Deckel;
- Fig. 6a - 6e: die verschiedenen Stufen im Herstellungsprozess;
- Fig. 7: eine Abdeckplatte des Batteriemoduls;
- Fig. 8 - 13: eine weitere ebenfalls bevorzugte Ausführungsform des erfindungsgemäßen Batteriemoduls in Einzelheiten, nämlich
- Fig. 8a, b: das Batteriemodul mit Gehäuse in einer Gesamtansicht einschließlich Deckel;
- Fig. 9a - c: zwei Gesamtansichten des Batteriemoduls ohne Deckel sowie den Deckel selbst;
- Fig. 10a, b: eine Zwischenwand, die zwischen zwei benachbarten Batteriezellen positioniert ist;
- Fig. 11a - d: mehrere Ansichten einer Abschlusswand, die gemeinsam mit einer Außenwand die Endwand des Gehäuses bildet;
- Fig. 12a, b: die Außenwand als Teil der Endwand;
- Fig. 13a - d: die verschiedenen Stufen beim Aufbau des Batteriemoduls.

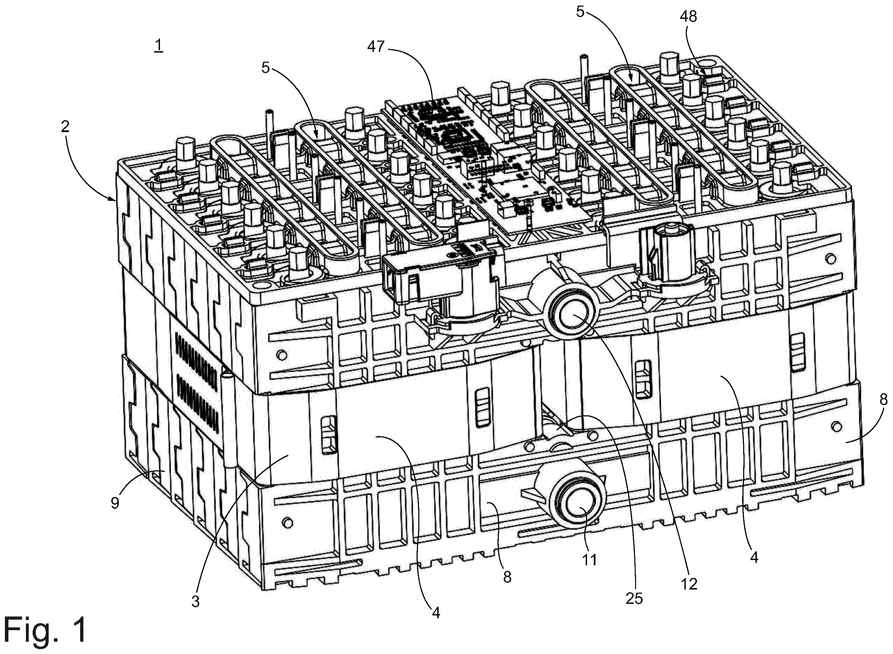

Figur 1 zeigt die Gesamtansicht eines erfindungsgemäßen Batteriemoduls 1 ohne Deckel. Das Batteriemodul 1 umfasst ein Batteriemodulgehäuse 2, das mit einer Spannvorrichtung 3 umschlossen ist. Die Spannvorrichtung 3 schließt zwei Spannbänder 4 aus Metall ein.

Das Batteriemodul 1 umfasst mehrere prismatische Batteriezellen 5. Sie sind hier von einer Abdeckplatte 48 nach oben abgedeckt, wobei die elektrischen Anschlüsse durch entsprechende Öffnungen herausragen. In der Mitte der Abdeckplatte ist eine Batteriemodulsteuerelektronik 47 zur Steuerung des Batteriemoduls 1 optional angeordnet.

Die Batteriezellen 5 sind in zwei Reihen angeordnet. In jeder Reihe sind sechs Batteriezellen 5 angeordnet, die elektrisch so miteinander verschaltet sind, dass mit den insgesamt zwölf Batteriezellen eine Nominalspannung von 38,4 V erzielt wird.

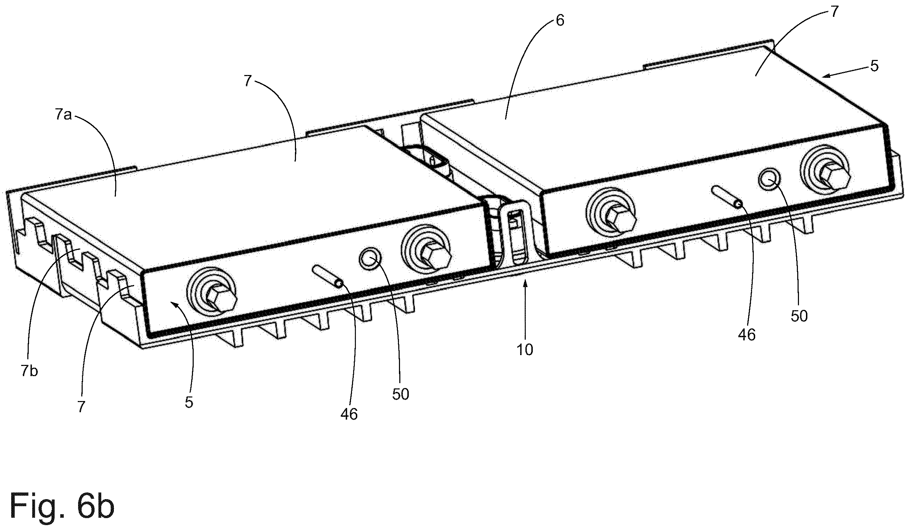

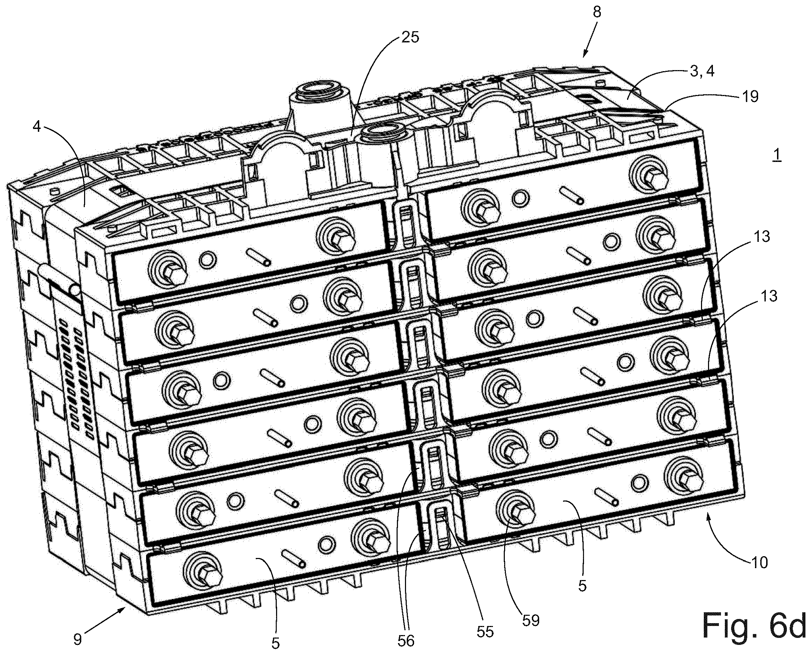

Die Batteriezellen 5, die in Figur 6b oder 6d genauer gezeigt sind, weisen ein Zellgehäuse 6 mit vier Seitenwänden 7 auf. Zwei parallele Seitenwände 7a, die im Folgenden als Längswand bezeichnet werden, sind größer als die anderen Seitenwände 7b, die als Stirnwand bezeichnet sind. Bevorzugt sind die Flächen der größeren Seitenwände 7a der Batteriezelle 5 wenigstens viermal so groß wie die Flächen der anderen Seitenwände (Stirnseitenwand 7b). Besonders bevorzugt sind die Flächen der Längswände 7a wenigstens fünfmal so groß wie die Stirnwände 7b.

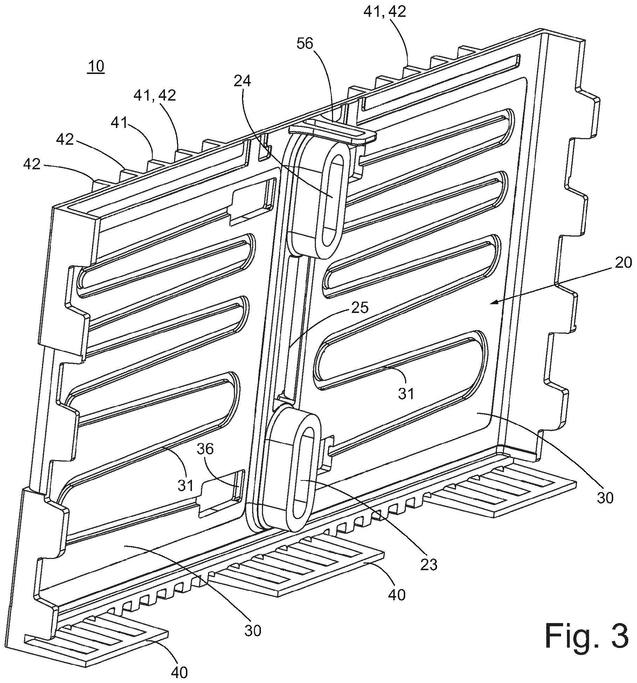

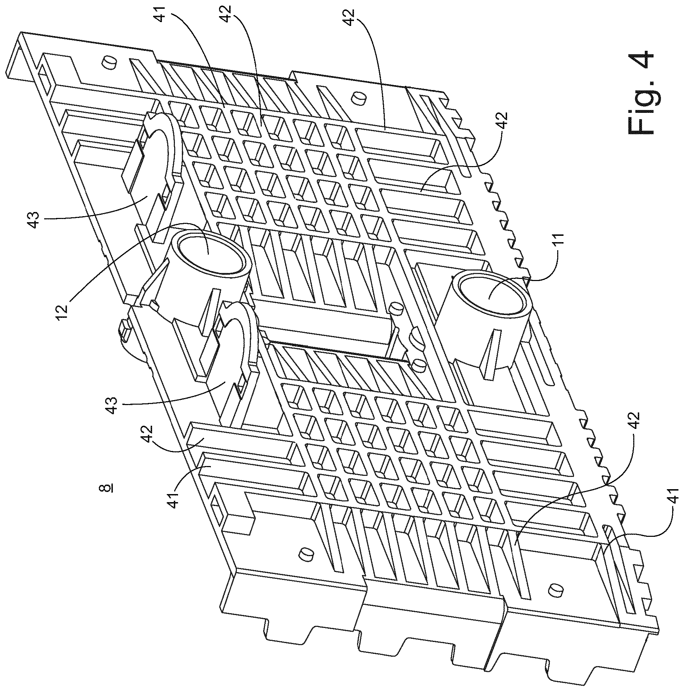

Das Batteriemodulgehäuse 2 besteht aus mehreren Teilen aus Kunststoff und schließt eine Vorderwand 8 (Figur 4), zwei Batteriemodulgehäuseseitenwände 9 sowie eine Rückwand 10 mit einer rippenartigen Struktur aus mehreren Quer- und Längsstegen (Figur 3) ein. Das Batteriemodulgehäuse 2 umfasst ein Kühlsystem mit einer Kanalstruktur und einem fluiden, bevorzugt flüssigen Kühlmittel. Die hier nicht gezeigte Kanalstruktur steht in Fluidverbindung mit einem Kühlmitteleinlass 11 und einem Kühlmittelauslass 12 des Batteriemodulgehäuses 2, die jeweils in der Vorderwand 8 angeordnet sind.

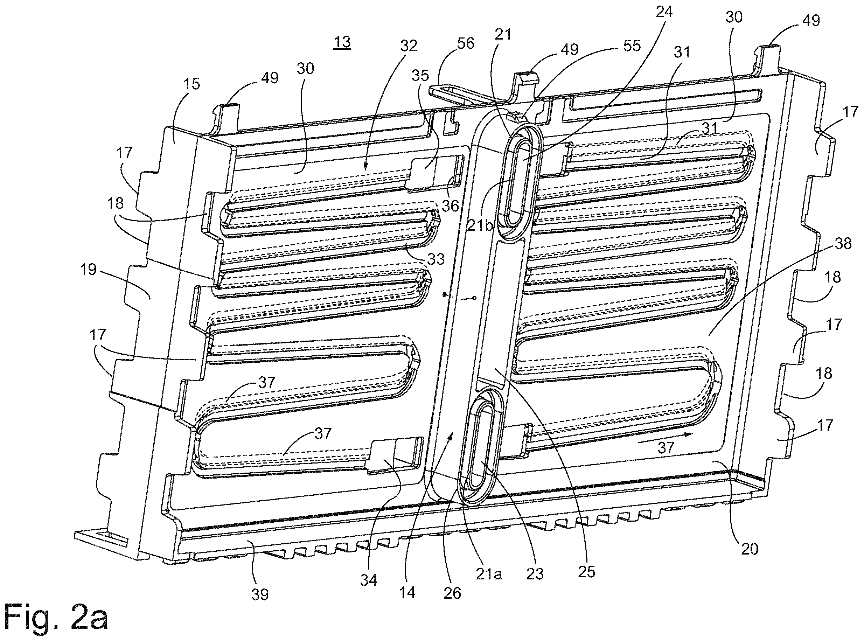

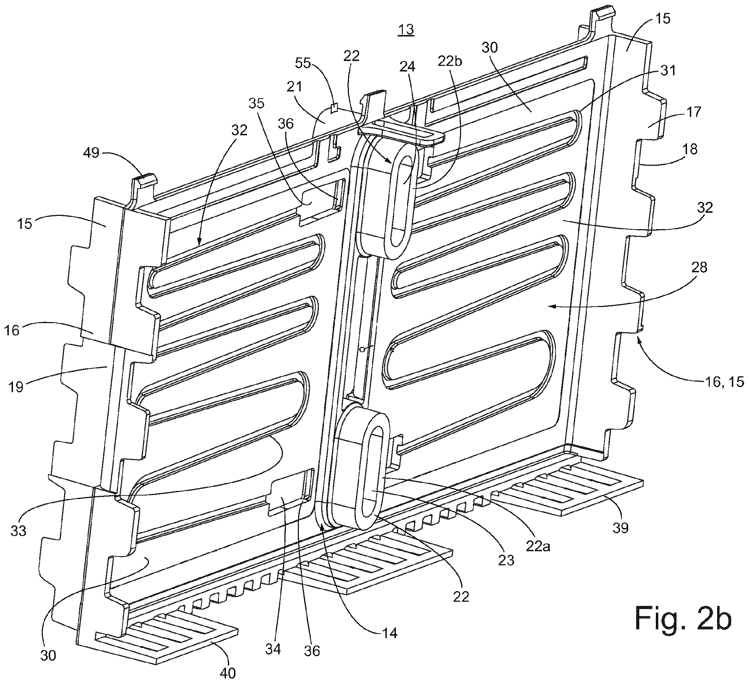

Innerhalb des Batteriemodulgehäuses 2 sind die Batteriezelle 5 so positioniert, dass zwischen zwei mit ihren Längsseiten 7a benachbarten Batteriezellen 5 je eine Zwischenwand aus Kunststoff, bevorzugt aus einem thermoplastischen Kunststoff, angeordnet ist (Fig. 2a, 2b). Die Zwischenwand 13 ist parallel zu den größeren Seitenwänden (Längswand 7a) der Batteriezellgehäuse 6 angeordnet.

Die Figuren 2a und 2b zeigen die Zwischenwand 13 im Detail. Sie ist bevorzugt symmetrisch aufgebaut, um jeweils zwei Batteriezelle 5 auf jeder Seite zu umgreifen. Selbstverständlich sind auch unsymmetrische Zwischenwände möglich, wenn die Batteriezelle nur in einer Reihe angeordnet sind oder die Zuführungen für das Kühlfluid außermittig erfolgen, z.B. seitlich. Dabei werden die Batteriezelle 5 zwischen einem Mittelteil 14 und je einer Zwischenwandseitenwand 15 eingefasst, die an der Stirnseite 16 der Zwischenwand 13 angeordnet ist. Diese bevorzugte Zwischenwand 13 trennt also insgesamt vier benachbarte Batteriezelle 5 voneinander.

Bevorzugt ist die Zwischenwandseitenwand 15 konturiert ausgebildet, so dass sie mit den Zwischenwandseitenwänden 15 benachbarter Zwischenwände 13 korrespondieren und ineinander greifen können. Die Zwischenwandseitenwand 15 überragt dabei die benachbarten Batteriezelle 5 teilweise. Sie weist bevorzugt eine zinnenartige Struktur auf, die mehrere Zinnen 17 umfasst. Die Zinnen 17 an einem Ende der Zwischenwandseitenwand 15 korrespondiert mit den zwischen den Zinnen 17 gebildeten Rücksprüngen 18 am anderen Ende der Zwischenwandseitenwand 15, so dass zwei benachbarte Zwischenwände 13 ineinandergreifen können. Die Zinnen 17 und Rücksprünge 18 könnten optional zusätzlich Rastelemente umfassen, um eine Verrastung der Zwischenwände 13 zu ermöglichen und die Stabilität des Gehäuses weiter zu erhöhen.

Die Zwischenwandseitenwand 15 ist in drei Teile unterteilt, wobei ihre Dicke im mittleren Teil gegenüber der Dicke im oberen und unteren Teil der Zwischenwandseitenwand 15 reduziert ist. Hierdurch wird eine Führung 19 für das Spannband 4 gebildet.

Das Mittelteil 14 auf der in Figur 2a gezeigten Vorderseite 20 ist in Form einer kragenartigen Buchse 21 ausgebildet, die mit einem Stecker 22 auf der Rückseite 28 der Zwischenwand 13 korrespondiert (Figur 2b). Die Buchse 21 schließt einen Verteilkanal 23 an seinem unteren Ende und einen Sammelkanal 24 sowie eine zwischen den beiden Kanälen 23, 24 angeordnete Durchgangsausnehmung 25 ein. Beim Zusammenbau des Batteriemodulgehäuses 2 werden mehrere benachbarte Zwischenwände 13 so zusammengebracht, dass die Steckteile des Verteilkanals 23 und des Sammelkanals 24 auf der Rückseite 28 der Zwischenwand 13 in die Buchsenteile des Verteilkanals 23 bzw. des Sammelkanals 24 eingesteckt werden. Die in Figur 2b gezeigten Steckerwände 22a und 22b korrespondieren mit den zwischen den Kanalwänden 21a und 21b und dem Kragen 26 des Mittelteils 14 gebildeten Zwischenräumen. Auf diese Weise können die Kanäle des Kühlsystems 27 verlängert werden, wobei die Buchse 21 und der Stecker 22 dichtend ineinander passen.

Die Zwischenwand 13 weist auf der Vorderseite 20 und der Rückseite 28 je zwei Kühlbereiche 30 auf, die jeweils zwischen dem Mittelteil 14 und den Zwischenwandseitenwänden 15 angeordnet sind. In dem Kühlbereich ist ein Kanal 31 der Kanalstruktur 32 angeordnet, die Teil des Kühlsystems 27 des Batteriemodulgehäuses 2 ist. Der Kanal 31 wird mittels einer Ausnehmung 33 der Zwischenwand 13 gebildet. In der hier gezeigten bevorzugten Ausführungsform ist die Ausnehmung 33 als einseitig offener Kanal 31 ausgebildet, wobei der Kanal 31 jeweils zur benachbarten Batteriezelle hin offen ist.

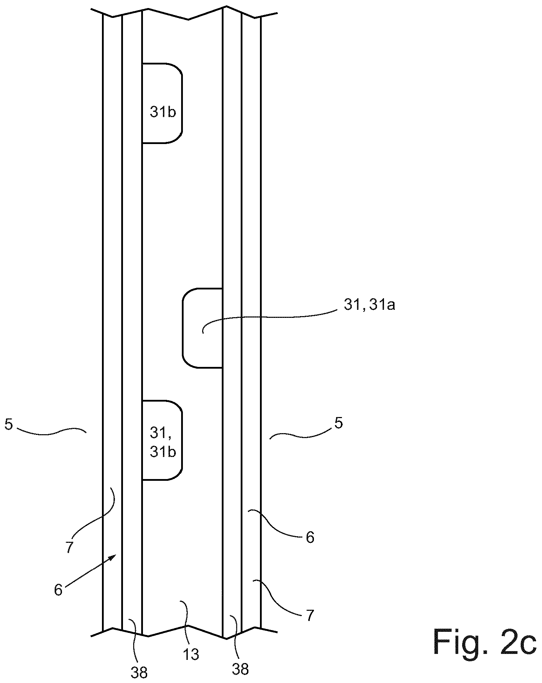

Sowohl auf der Vorderseite 20 wie auch auf der Rückseite 28 der Zwischenwand 13 sind je ein einseitig offener Kanal 31 angeordnet. Die Kanäle 31 weisen am vorderen Ende 34 eine Verbindung zum Verteilkanal 23 und an ihrem hinteren Ende 35 eine Verbindung zum Sammelkanal 24 auf. In der gezeigten Ausführung gemäß Figur 2 sind am vorderen und am hinteren Ende 34, 35 jeweils Aufweitungen gezeigt, die lediglich fertigungstechnische Gründe haben. An den Enden 34, 35 des Kanals 31 ist in der Aufweitung je eine Durchführung 36 angeordnet, die die Fluidverbindung zum Verteilkanal 23 bzw. zum Sammelkanal 24 herstellt. Eine Durchführung 36 wird also von den beiden Kanälen 31 verwendet, die im jeweiligen Kühlbereich 30 auf der Vorderseite 20 und Rückseite 28 angeordnet sind.

Die Kanäle 31 sind jeweils mäanderförmig und haben mehrere Mäanderschlaufen. Der Kanal 31 auf der Vorderseite 20 ist gegenüber dem Kanal 31 auf der Rückseite 28 leicht nach unten versetzt, wobei sich die beiden Kanäle 31 an den Wendepunkten der Mäanderschlaufe kreuzen. Eine Verbindung der beiden Kanäle 31 an den Mäanderschlaufen ist nicht schädlich. Sie führt lediglich zu einer Durchmischung der Kühlflüssigkeit, die Flussrichtung bleibt aber erhalten.

Die Kanäle 31 sind derart ausgebildet, dass die Mäanderschlaufen von unten nach oben hin enger werden und somit enger in Flussrichtung (Pfeil 37) des Kühlmittels. Die noch unverbrauchte Kühlflüssigkeit aus dem Verteilkanal 23 fließt am vorderen Ende 34 in den Kanal 31 ein. Die Wärmeableitung aus den Batteriezelle ist hier sehr gut. Mit fortlaufender Flussrichtung nimmt die Kühlwirkung des Kühlmittels ab, was durch die engeren Mäanderschlaufen des Kanals 31 kompensiert wird, so dass über den gesamten Kühlbereich 30 eine gleichmäßige Kühlung erfolgt.

Die Kühlbereiche 30 der Zwischenwand 13 werden mit einer Kunststofftrennschicht 38 aus Polyamid abgedeckt. Bevorzugt ist sie eine transparente PA66-Folie und mittels Laser auf die Kühlbereiche 30 aufgeschweißt. Um das Laserschweißen zu optimieren, ist die Zwischenwand 13 bevorzugt aus einem dunklen Kunststoff hergestellt.

Den Figuren 2a und 2b ist zu entnehmen, dass die Zwischenwand 13 einen Zwischenwandboden 39 aufweist, der an der Rückseite 28 der Zwischenwand 13 drei konturierte Laschen 40 umfasst. Diese Laschen 40 greifen mit Rastnoppen unter die benachbarte Zwischenwand 13, so dass die Zwischenwände 13 miteinander verrasten. An der Oberseite der Zwischenwand 13 erstreckt sich an der Rückseite 28 eine Rastzunge 56, die oberhalb des Mittelteils 14 angeordnet ist. Die Rastnase 55 und die Rastzunge 56 benachbarter Zwischenwände greifen ineinander und halten die Wände 13 in ihrer Position. Durch den modularen Aufbau des Batteriemodulgehäuses 2 ist nicht nur eine große Flexibilität und einfache Erweiterbarkeit gegeben, gleichzeitig wird eine hohe Stabilität erzeugt, da die einzelnen Zwischenwände 13 miteinander verrasten können.

Figur 2c zeigt eine Detailzeichnung eines Schnitts durch den Kühlbereich 30 der Zwischenwand 13. Neben der Zwischenwand 13 sind auch die Kunststofftrennschichten 38 sowie die Seitenwände 7 der Zellgehäuse 6 der benachbarten Batteriezelle 5 gezeigt.

Deutlich zu erkennen ist, dass die beiden einseitig offenen Kanäle 31a, 31b der Kanalstruktur 32 in der Zwischenwand 13 versetzt zueinander angeordnet sind. Der Ausschnitt in Figur 2c zeigt die Kanäle im oberen Bereich des Kühlbereichs 30, in dem die Mäanderschlaufen bereits eng beieinander liegen. Die Kanäle 31a, 31b sind jeweils an ihrer offenen Seite von der Trennschicht 38 abgedeckt und verschlossen. Die Kunststofftrennschicht 38 weist eine wesentlich geringere Dicke auf als die Zwischenwand 13. Dadurch ist ein guter Wärmeübergang von der Batteriezellenseitenwand 7 zu dem Kühlmittel im Kanal 31 gegeben.

Figur 3 zeigt die Rückwand 10 des Batteriemodulgehäuses 2. Sie ist im Aufbau der Zwischenwand 13 ähnlich. Ihre Vorderseite 20 entspricht der Vorderseite 20 einer Zwischenwand 13. Die Rückwand 10 hat eine Durchgangsausnehmung 25 für eine Spannvorrichtung oder ein Spannband, das sich durch die entsprechende Ausnehmung der Zwischenwände 13 erstreckt. Allerdings ist in der Rückwand 10 in jedem Kühlbereich 30 jeweils nur ein Kanal 31 vorhanden. Der Kanal 31 ist zur Innenseite der Rückwand 10 hin offen. Er ist mit einer Kunststofftrennschicht 38 seitlich verschlossen. Die Dicke der Rückwand 10 ist deshalb bevorzugt geringer als die Dicke der Zwischenwand 13. Der Verteilkanal 23 und der Sammelkanal 24 für die Kühlflüssigkeit sind je als Endstück ausgebildet und haben keine Durchgangsbohrung wie in den Zwischenwänden. Die Kühlflüssigkeit gelangt von dem Verteilkanal 23 lediglich in die beiden Kanäle 31 der Rückwand 10 und von dort in den Sammelkanal 24.

An der Außenseite weist die Rückwand 10 mehrere Verstärkungen 41 in Form von Quer- und Längsstreben auf. Die Querstreben sind bevorzugt als vertikale Rippen 42 ausgebildet. Die Verstärkungen 41 an der Außenseite der Rückwand 10 entsprechen bevorzugt den Verstärkungen 41 an der Vorderwand 8, die in Figur 4 gezeigt ist. Diese Verstärkungen 41 sind in dieser Ausführung als vertikale und horizontale Rippen 42 über die Außenseite der Wand 8 verteilt und wirken Verformungen entgegen. Sie dienen gleichzeitig der Druckaufnahme, um im Inneren des Batteriemodulgehäuses 2 entstehende Drücke aufzunehmen und die Stabilität des Gehäuses zu erhöhen. Optional sind die Endwände (Vorderwand 8 und Rückwand 10) stärker ausgebildet als die Zwischenwände 13, wenn hohe Drücke und eine große Stabilität gefordert ist.

Die Vorderwand 8 hat einen ähnlichen Aufbau wie die Rückwand 10. Auch sie weist nur Kanäle 31 in einer Ebene auf, nämlich an ihrer Innenseite. Die Kanäle 31 sind bevorzugt zur Innenseite hin offen und werden wie die Kanäle 31 in den Zwischenwänden 13 mit einer Kunststofftrennschicht 38 seitlich verschlossen. Es sind keine zwei in der Dicke der Wand 8 nebeneinander liegende Kanäle 31 angeordnet.

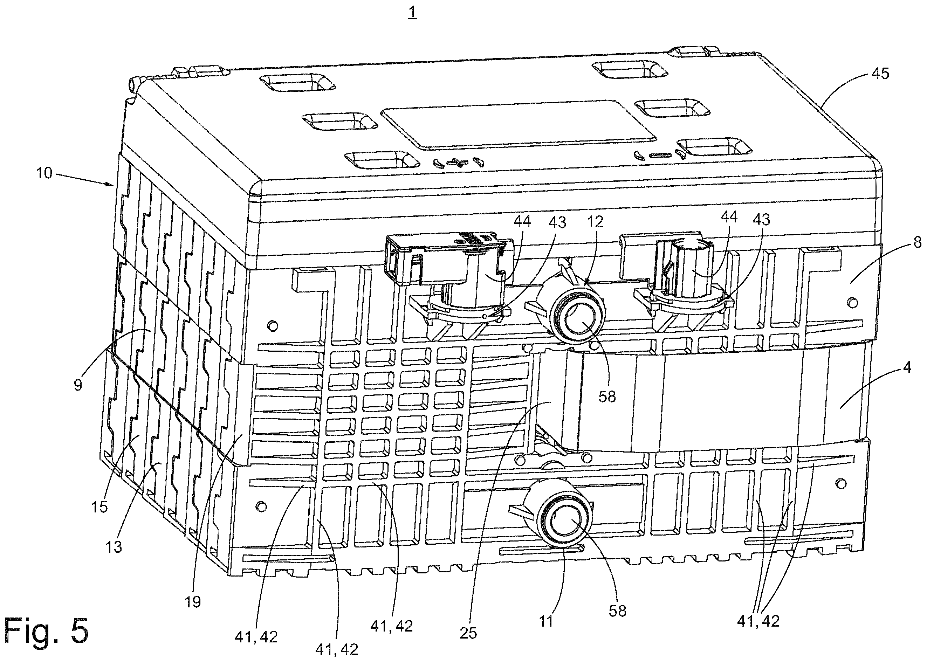

Ebenso wie die Rückwand 10 hat auch die Vorderwand 8 eine Durchgangsausnehmung 25 für ein Spannband 4. Gegenüber der Rückwand 10 weist die Vorderwand 8 an der Außenseite zusätzlich den Kühlmitteleinlass 11 sowie den Kühlmittelauslass 12 auf. In einer bevorzugten Ausführungsform umfassen der Kühlmitteleinlass 11 und der Kühlmittelauslass 12 eine Schnellkupplung 58, wie sie auch in Figur 5 zu sehen ist. Die Schnellkupplung 58 dient zum einfachen, werkzeuglos betätigbaren Anschluss an ein externes Kühlsystem mit einem Kühlschlauch. Durch die geeignete Materialwahl des Kühlsystems einschließlich der Vorderwand 8, der Rückwand 10 und der Zwischenwand 13 ist es möglich, die Kühlung nicht nur mit Wasser, sondern mit einer anderen Kühlflüssigkeit zu betreiben, z.B. mit Wasser-Glykol-Mischungen. Beispielsweise kann bei der Verwendung des Batteriemoduls im Fahrzeug das für andere Kühlzwecke, wie beispielsweise die Klimaanlage, verwendete Kühlmittel eingesetzt werden. Möglich ist auch die Verwendung gasförmiger Kühlmedien; es kann z.B. Luft oder auch SO₂ verwendet werden.

In den Figuren 4 und 5 ist zu erkennen, dass die Vorderwand 8 zwei Aufnahmen 43 aufweist, an denen die elektrischen Anschlüsse 44 angeordnet sind. Diese werden von einer Abdeckung geschützt.

In Figur 5 ist aus Gründen der Veranschaulichung das Batteriemodul 1 mit nur einem Spannband 4 gezeigt, das eine Reihe von Batteriezellen 5 und die entsprechenden Gehäuseteile umschließt. Das Spannband 4 ist durch die Durchgangsausnehmung 25 zwischen den Batteriezellreihen geführt und umspannt einen Teil der Vorderwand 8 und der Rückwand 10 und die eine Batteriemodulseitenwand 9. Das Spannband wird über den rippenartigen Verstärkungen 41, 42 geführt.

Das Batteriemodul 1 ist mit einem Deckel 45 abgedeckt, der die darunter liegenden Teile und Bauelemente, wie beispielsweise die Batteriemodulsteuerelektronik 47 schützt. Die Batteriemodulsteuerelektronik 47 kann in dem Batteriemodulgehäuse 2 oder in dem Deckel angeordnet sein. Besonders bevorzugt ist sie oberhalb der Abdeckplatte 48 angeordnet (Figur 1).

Die Abdeckplatte 48 aus Kunststoff ist oberhalb der Zwischenwände 13 und der Batteriezellen 5 angeordnet. Sie wird mittels der Rasthaken 49 (Fig. 2a und 2b) an der Oberseite der Zwischenwände 13 verhakt. Dadurch wird die Stabilität des gesamten Batteriemodulgehäuses 2 verbessert.

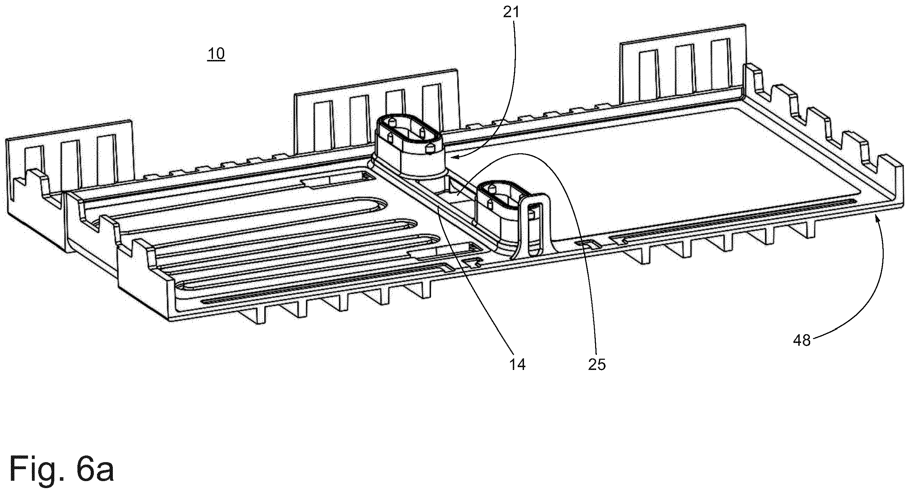

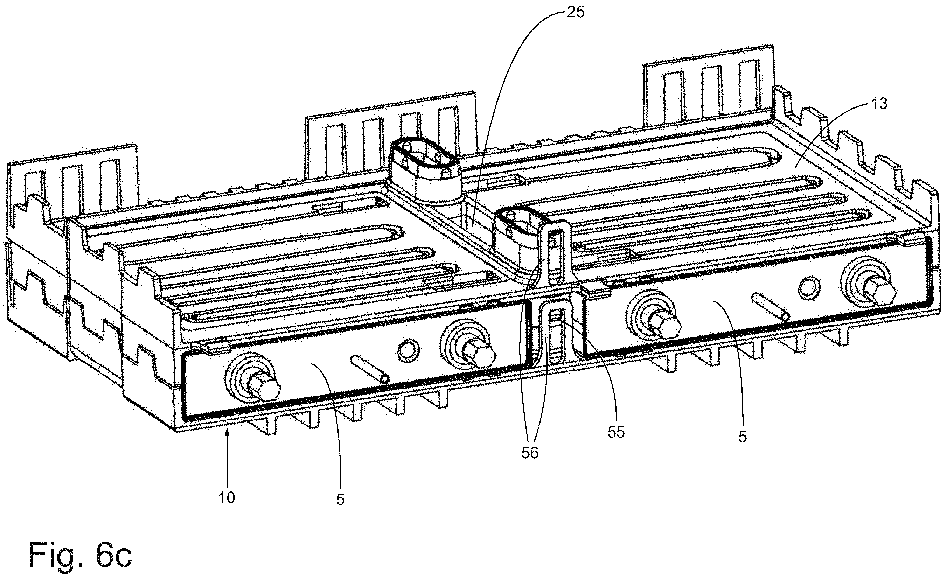

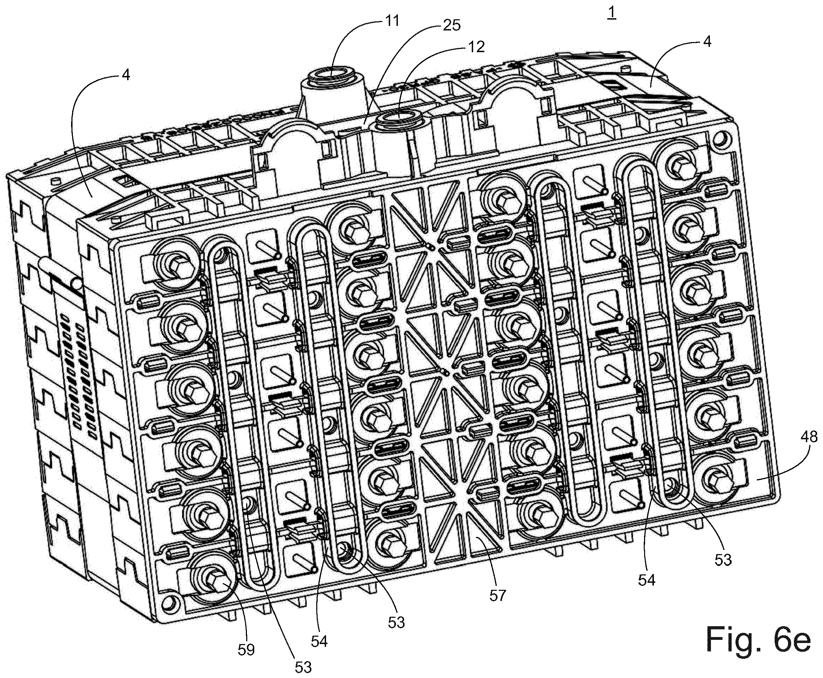

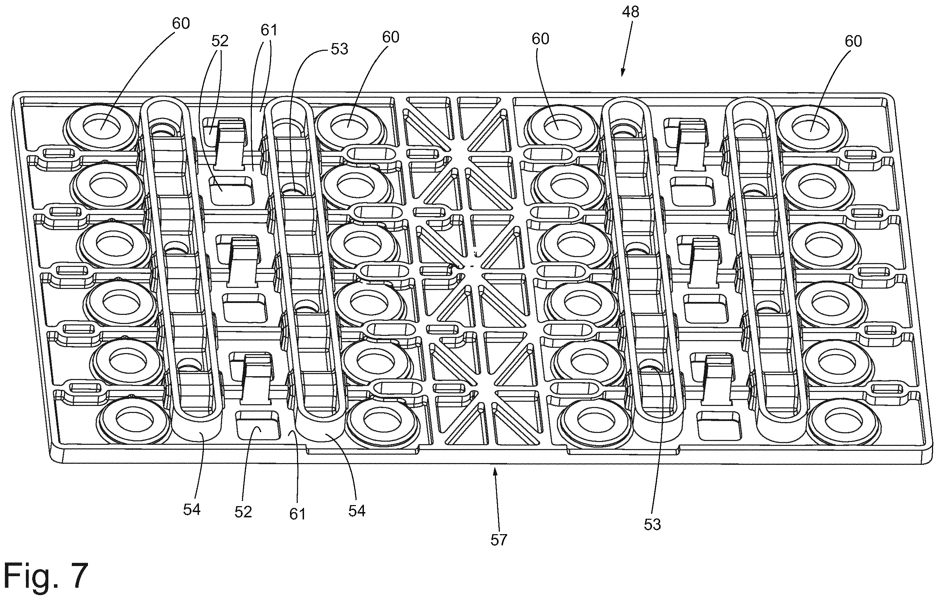

Die in Figur 7 gezeigte Abdeckplatte 48 weist entsprechende Öffnungen 60 für die elektrischen Anschlüsse 59 der Batteriezellen 5, Öffnungen 52 für die Elektrolyt-Befüllanschlüsse 46 (Fig. 6b) zum Befüllen der Batteriezellen 5 mit dem Elektrolyten sowie weitere Öffnungen 53 oberhalb der in Form von Berstscheiben 50 (Fig. 6 b) ausgebildeten Überdrucköffnung der Batteriezellen 5 auf. Die Elektrolyt-Befüllanschlüsse 46 der Batteriezellen 5 sind in Form von Röhren ausgebildet, die sich durch eine Befüllanschlussöffnung 52 der Abdeckplatte 48 erstreckt. Um die Befüllanschlussöffnung 52 ist eine muldenartige Vertiefung 61 vorgesehen, um überschüssige Elektrolytflüssigkeit aufzunehmen, falls sie beim Befüllen austritt. Die Elektrolytflüssigkeit kann nicht auf das Batteriezellgehäuse 6 gelangen und einfach während der Montage bzw. nach dem Befüllen der jeweiligen Batteriezelle entfernt werden. Dies ist besonders dann vorteilhaft, wenn die Batteriezellen 5 erst nach der Montage in dem Batteriemodulgehäuse 2 befüllt werden.

An der Oberseite weist die Abdeckplatte 48 mehrere kragenförmige Rahmen 54 auf, die je zwischen dem Befüllanschlussöffnungen 52 und den Durchlassöffnungen 60 für die elektrischen Anschlüsse 59 der Batteriezelle 5 angeordnet sind und die Berstscheibenöffnungen 53 der Abdeckplatte 48 umragen. Der kragenartige Rahmen 54 ist gegenüber dem Deckel 45 abgedichtet, so dass im Falle eines Überdrucks austretende Gase beim Sprung der Berstscheibe 50 innerhalb des Rahmens 54 gehalten werden und nicht unkontrolliert in die Umgebung hinaustreten. Gegenüber den bekannten Vorrichtungen zum Sammeln von aus Batteriezellen austretenden Gasen, wie z. B. US 5,643,691 oder US 7,504,175 B2, ist die kragenförmige Ausgestaltung des Rahmens sehr effektiv und gleichzeitig konstruktiv sehr einfach. Die von dem Rahmen 54 und dem Gehäusedeckel 45 gebildete Sammelkammer nimmt austretende Gase zuverlässig auf.

Optional kann das Batteriemodulgehäuse 2 im Deckel 45 zwei Auslassventile aufweisen, um die in den kragenartigen Rahmen 54 gesammelten Gase nach außen zu leiten. Gegebenenfalls findet die Ausleitung kontrolliert in die Umgebung statt, beispielsweise in die Umgebung außerhalb eines Fahrzeuges oder eines anderen Einsatzortes des Batteriemoduls. Alternativ können die Gase auch in einem externen Sammelbehälter gesammelt werden.

Da die benachbarten Batteriezellen 5 jeweils um 180 Grad gedreht angeordnet sind, damit jeweils ein Pluspol neben einem Minuspol der benachbarten Batteriezellen liegt, sind auch die außermittigen Berstscheiben 50 alternierend rechts bzw. links der Elektrolyt-Befüllanschlüsse 46 angeordnet. Deshalb weist die Abdeckplatte 48 insgesamt vier kragenartige Rahmen 54 auf.

In den Figuren 6a bis 6e ist der Montageprozess eines Batteriemoduls 1 verdeutlicht. Zunächst wird die Montage damit begonnen, dass die Rückwand 10 mit ihrer Außenseite auf eine Unterlage gelegt wird (Figur 6a). Anschließend werden zwei gleich ausgerichtete Batteriezellen 5 in die zwischen dem Mittelteil 14 und den Seitenwänden gebildeten Aufnahmen gelegt (Figur 6b).

In einem weiteren Schritt (Figur 6c) wird eine Zwischenwand 13 auf die Batteriezellen 5 aufgelegt und mit der Rückwand 10 verrastet. Dabei erstreckt sich der Stecker 22 der Zwischenwand 13 in die Buchse 21 der Rückwand 10, so dass die jeweiligen Verteilkanalstücke 23 und Sammelkanalstücke 24 dichtend miteinander verbunden werden. Die Zinnen 17 und Rücksprünge 18 der Zwischenwandseitenwände 15 greifen ineinander und bilden ein Batteriemodulgehäuseseitenwandteil.

Im nächsten Montageschritt werden auf die Zwischenwand 13 wiederum zwei Batteriezellen 5 gelegt, wobei in jedem Stapel die Batteriezellen 5 derart angeordnet sind, dass jeweils ein Pluspol der unteren Zelle 5 einem Minuspol der oberen Zelle 5 benachbart ist. Anschließend erfolgt wieder das Aufbringen einer weiteren Zwischenwand 13 bis insgesamt zwei Reihen mit je sechs Batteriezellen 5 aufeinander gestapelt sind. Je zwei benachbarte Zwischenwände 13 verrasten miteinander. Beim Verrasten greift eine Rastnase 55 einer Zwischenwand 13 in die Rastzunge 56 der nächsten Zwischenwand 13. Zusätzlich erfolgt eine Verrastung der Böden der benachbarten Zwischenwände 13. Gleiches erfolgt zwischen Zwischenwand und den Endwänden.

Als letzter Schritt erfolgt die Montage der Vorderwand 8, die auf die letzte Ebene der Batteriezellen 5 aufgelegt und mit der darunter liegenden Zwischenwand 13 verrastet wird (Figur 6d). Durch die Montage der Vorderwand 8, der Zwischenwände 13 und der Rückwand 10 wird die Batteriemodulgehäuseseitenwand 9 sowie der (nicht gezeigte) Batteriemodulgehäuseboden gebildet. Um die Stabilität des Batteriemodulgehäuses 2 weiter zu erhöhen, wird die Spannvorrichtung 3 angebracht, die aus zwei Spannbändern 4 besteht. Jedes Band 4 wird um jeweils eine Reihe (Stapel) von Batteriezellen 5 gespannt, wobei das Spannband 4 durch die jeweiligen Durchgangsausnehmungen 25 verläuft und in dem mittleren Bereich der Seitenwand in der Führung 19 geführt wird.

Figur 6d ist zu entnehmen, wie die benachbarten Zwischenwände 13 am oberen Ende miteinander verrasten. Als zusätzliche Verrastung greift die Rastnase 55 am oberen Ende der Buchse 21 in die korrespondierende Rastzunge 56 der Zwischenwand 13.

Figur 6e zeigt schließlich das Batteriemodulgehäuse 2 mit montierter Abdeckplatte 48. Zur endgültigen Fertigstellung des Batteriemoduls 1 werden dann noch die einzelnen Pole (elektrische Anschlüsse 59) der Batteriezellen 5 miteinander verbunden sowie die Anschlussklemmen 44 für das Batteriemodul 1 montiert. Optional wird in einer Mittelaufnahme 57 der Abdeckplatte 48 die Batteriemodulsteuerelektronik 47 positioniert. Das Anbringen des Deckels 45 schließt die Montage ab.

Optional ist im Deckel 45 des Batteriemodulgehäuses 2 ein elektrischer Anschluss für die Batteriemodulsteuerelektronik 47 vorgesehen. Dies kann beispielsweise eine Busleitung wie ein CAN-Bus sein.

Um höhere Spannungen und/ oder Kapazitäten zu erhalten, können mehrere Batteriemodule 1 z.B. in einem Fahrzeug zusammengeschaltet werden. Die entstehende Batterie besteht dann aus einem oder mehreren Batteriemodulen 1. Die Batteriezellen, das Batteriemodul bzw. die gesamte Batterie lassen sich einzeln oder in Kombination steuern. Beispielsweise kann eine sicherheitstechnische Abschaltung einzelner Batteriemodule erfolgen. Auch ein Überbrücken der entsprechenden Batteriemodule könnte über die Batteriemodulsteuerelektronik oder Batteriesteuerelektronik gesteuert werden. Beispielsweise lässt sich durch eine geeignete Verschaltung der Batteriezellen 5 in dem Batteriemodul 1 und eine entsprechende Steuerung via der Batteriemodulsteuerelektronik 47 und/oder einer Batteriesteuerelektronik eine Sicherheitsschaltung realisieren, wie sie z. B. in WO 2011/095630 A1 offenbart ist.

Das Batteriemodul kann beispielsweise in einem Fahrzeug montiert und dort mit weiteren Batteriemodulen zusammengeschaltet und/oder an die Fahrzeugelektronik angeschlossen werden. Zusätzlich erfolgt noch der Anschluss an ein fahrzeugeigenes Kühlsystem, in dem ein Kühlmittelschlauch an den Kühlmitteleinlass 11 sowie ein weiterer an den Kühlmittelauslass 12 angeschlossen wird.

Das erfindungsgemäße Batteriemodul kann nicht nur in einem Fahrzeug verwendet werden. Das Batteriemodul kann beispielsweise auch zur Energiespeicherung und Einspeisung in das Mittel- und/oder Niederspannungsnetz oder zur dezentralen Energiespeicherung in Kombination mit Anlagen zur Gewinnung regenerativer Energien verwendet werden. Die erfindungsgemä-ßen Batteriemodule können zum Beispiel auch als unterbrechungsfreie Stromversorgung (USV) oder als Notstromversorgung eingesetzt werden. Ein mögliches weiteres Einsatzgebiet liegt in der Stabilisierung von Inselnetzen. Dabei werden bevorzugt mehrere Batteriemodule zusammengeschaltet. Die gewünschten Energieinhalte, Spannungsniveaus oder geforderten Stromstärken spiegeln sich dann in der Konfiguration der einzelnen Batteriemodule wieder und in der internen Anordnung der Batteriezellen.

Selbstverständlich ist es möglich, Batteriemodule nicht nur in der hier gezeigten Konfiguration aufzubauen. Zum einen können mehrere Batteriezellen miteinander kombiniert werden, so dass bei einer zweireihigen Anordnung der Batteriezellen 5 auch Module mit beispielsweise drei, vier oder neun Batteriezellen in je zwei Reihen angeordnet sind. Optional kann ein Batteriemodul aufgebaut werden, das nur eine Reihe an Batteriezellen 5 aufweist, beispielsweise können dann sechs, neun, zwölf oder 18 Zellen miteinander kombiniert werden. Eine bevorzugte Ausführungsform, bei der 6 Zellen in Reihe kombiniert werden, wird weiter unten beschrieben. Im Fall der einreihigen Anordnung der Batteriezellen 5 ist der Verteilkanal 23 und der Sammelkanal 24 an der Seite der Batteriezellen 5 angeordnet. Das Verteilsystem für das Kühlmittel ist dann entsprechend anzupassen.

Im Rahmen der Erfindung wurde beispielhaft ein Batteriemodul 1 mit zwölf elektrisch in Reihe geschalteten Batteriezellen 5 näher untersucht. Die Batteriezellen 5 sind in zwei Reihen zu je sechs Zellen 5 angeordnet. Es wurde erkannt, dass die Kanalstruktur 32 des Kühlsystems im Batteriemodulgehäuse 2 bevorzugt derart ausgebildet ist, dass bei einer entsprechend dimensionierten externen Kühlflüssigkeitspumpe innerhalb des Kanals 31 im Batteriemodulgehäuse 2 die Kühlflüssigkeit mit einer Fließgeschwindigkeit von wenigstens 1 Liter pro Minute, bevorzugt wenigstens 1,5 Liter pro Minute fließt. In einer besonderen Ausführungsform ist die Fließgeschwindigkeit wenigstens 1,6 Liter pro Minute.

Untersuchungen haben beispielsweise gezeigt, dass mit einer derartigen Fließgeschwindigkeit die Temperatur in den Zellen auf maximal 40° C geregelt wird, eine Kühlflüssigkeitstemperatur von 25° C vorausgesetzt. Im ungekühlten Zustand würde die Temperatur einer Batteriezelle, deren Elektrolytlösung auf SO₂ basiert, auf über 60° C steigen, bei einem konstanten Entladestrom von 100 A. Eine derartige Temperaturerhöhung führt zu einer Erhöhung des Drucks. Der entstehende Druck wird auf das Batteriezellgehäuse 6 und auf das Batteriemodulgehäuse 2 übertragen, so dass - bei ungekühltem Betrieb des Batteriemoduls - Deformationen von mehr als 2,5 mm, teilweise bis über 3 mm auftreten können. Derartige Kräfte werden durch die effiziente Kühlung vermieden. Des Weiteren wird durch die Spannvorrichtung eine Beschädigung oder Deformation des Batteriemodulgehäuses verhindert.

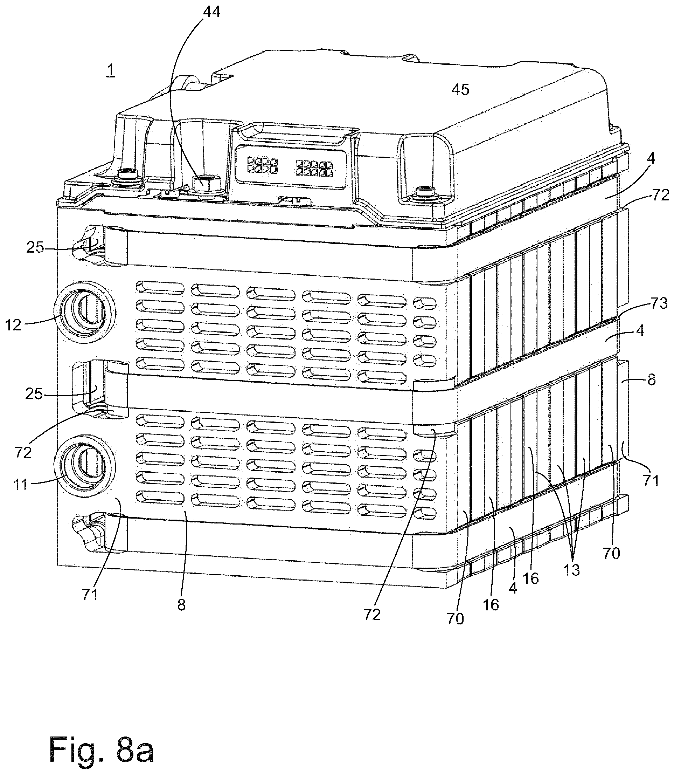

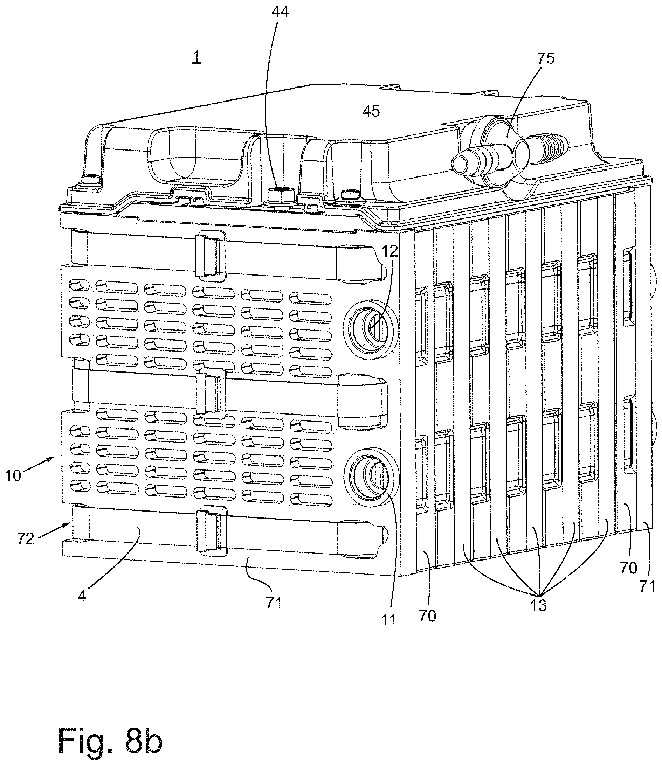

Die Figuren 8 bis 13 zeigen eine weitere, alternative aber ebenso bevorzugte Ausführungsform des erfindungsgemäßen Batteriemoduls. In dieser Ausführungsform sind die einzelnen Batteriezellen lediglich in einer Reihe angeordnet und nicht in zwei nebeneinander angeordneten Reihen wie in der vorherigen Ausführungsform gemäß den Figuren 1 bis 7. In dieser Ausführungsform der Batterie sind ebenfalls sechs Batteriezellen 5 in einer Reihe angeordnet, wobei die Batteriezellen so miteinander elektrisch verschaltet sind, dass sich eine Nominalspannung von insgesamt von 19,2 V erzielen lässt.

In Figur 8a ist eine Frontansicht des Batteriemoduls 1 gezeigt, das ein Batteriemodulgehäuse 2 umfasst. Das Batteriemodulgehäuse 2 schließt mehrere Teile aus Kunststoff ein, die von mehreren Zwischenwänden 13 sowie einer vorderen Endwand 8 und einer hinteren Endwand 10 gebildet wird. Die einzelnen Wände sind mit drei Spannbändern 4 aus Metall umschlossen, die eine Spannvorrichtung 3 bilden.

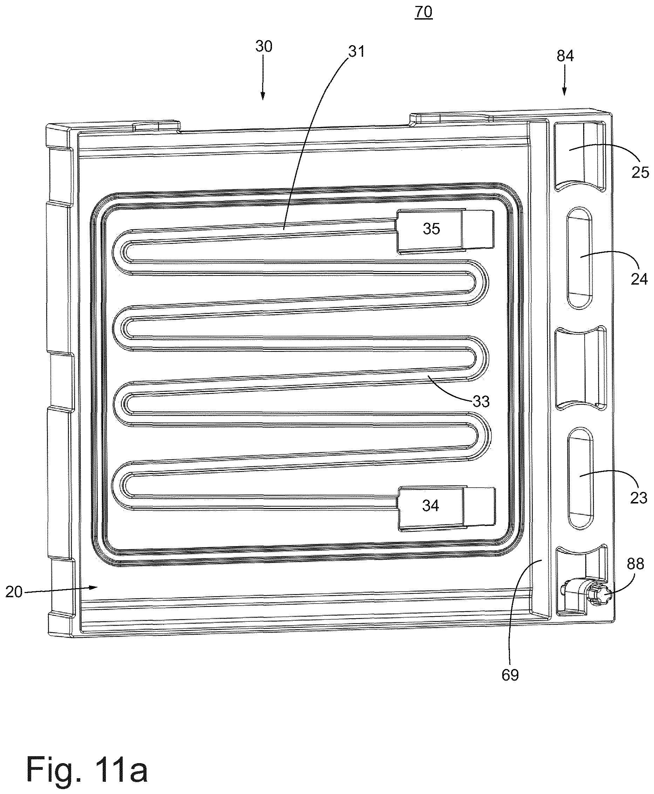

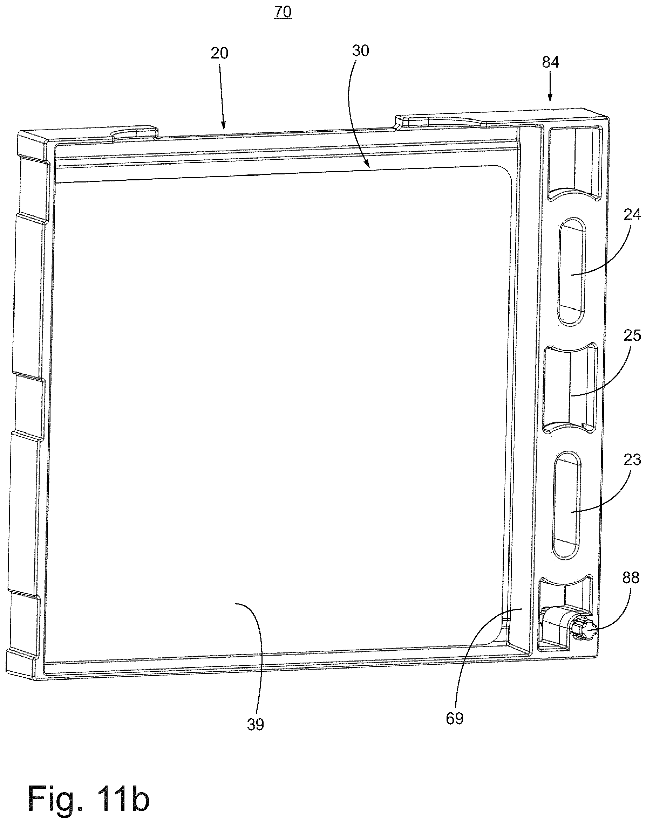

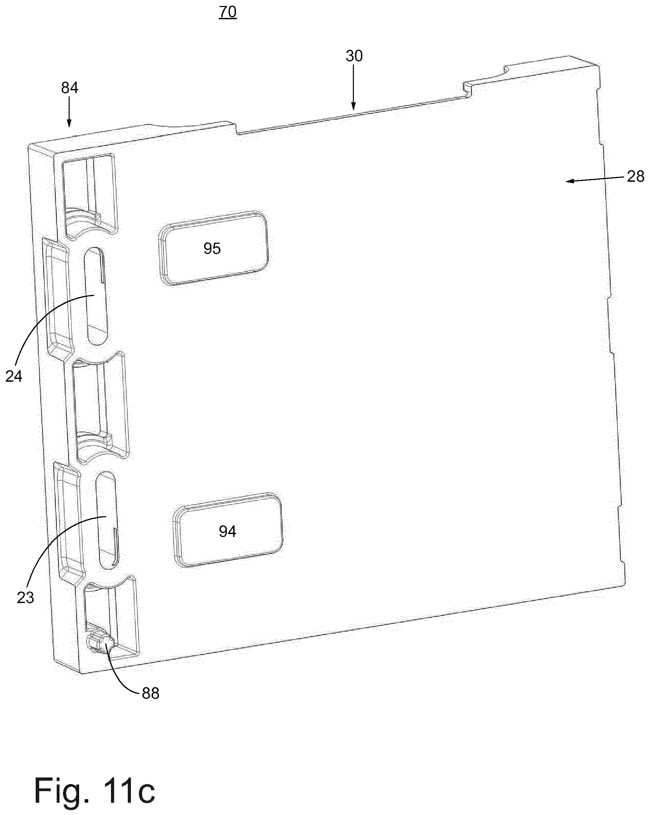

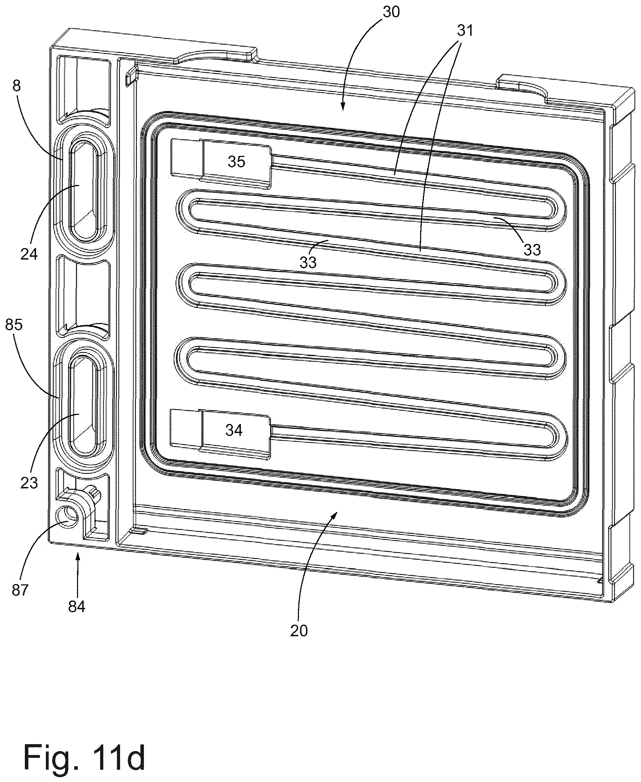

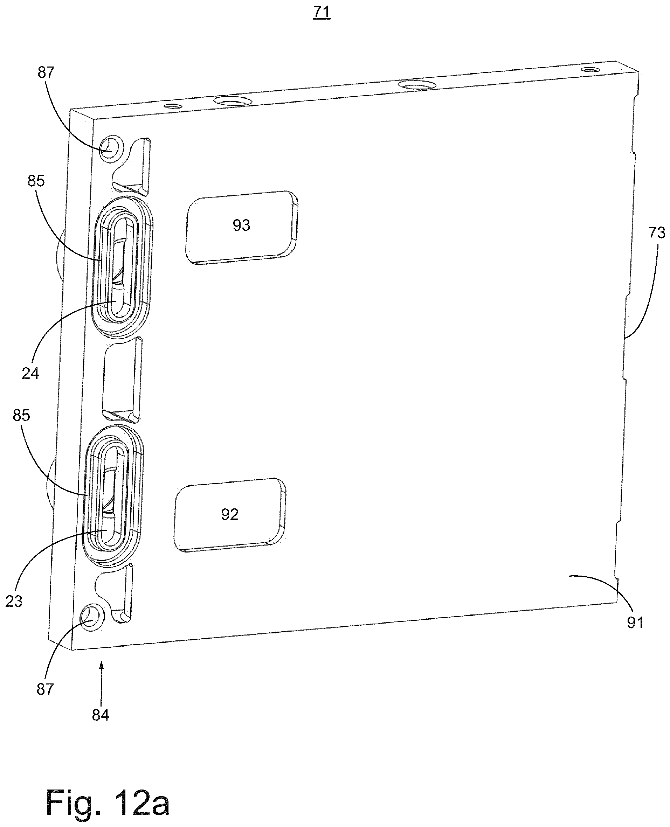

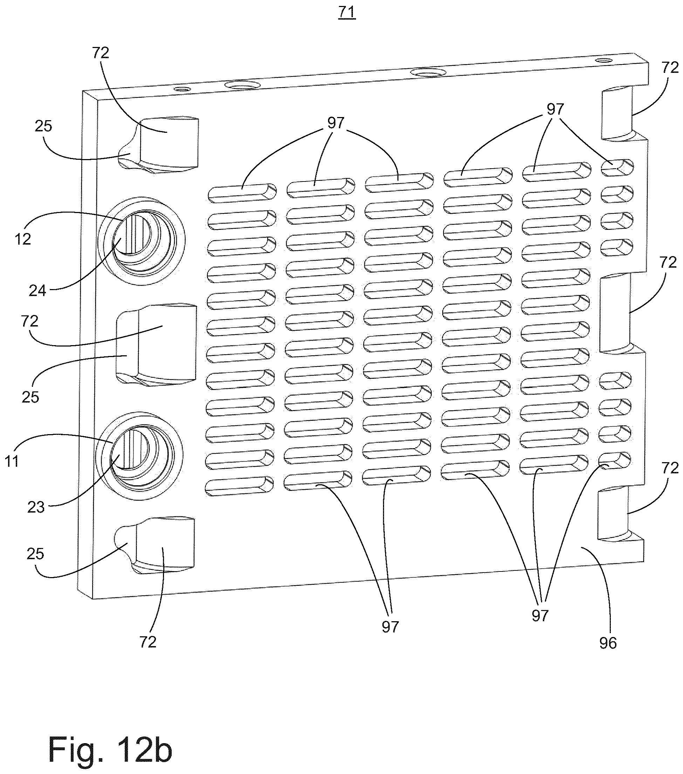

Die Endwände 8, 10 werden jeweils aus einer Abschlusswand 70 und einer Außenwand 71 gebildet, die in den Figuren 11 und 12 gezeigt sind. Alle Wände (Abschlusswand 70, Außenwand 71, Zwischenwand 13) weisen für jedes Spannband 4 eine Durchgangsausnehmung 25 auf, durch die das Spannband 4 geführt wird. An der von der Durchgangsausnehmung 25 beabstandeten Seitenwand der Außenwand 71 ist für jedes Spannband 4 eine Führungsabrundung 72 an der äußeren Ecke ausgebildet, um das Spannband 4 zu führen und um eine scharfe Kante zu vermeiden. Die beiden Abschlusswände 70 sowie die Zwischenwände 13 weisen an ihren Seiten bzw. ihren Stirnseiten 16 eine Führungsausnehmung 73 auf, in der das Spannband 4 seitlich geführt wird.

Die Figuren 8a und 8b zeigen, dass die Anschlüsse für das Kühlmittel seitlich ausgebildet sind. Der Kühlmitteleinlass 11 ist in der unteren Hälfte des Batteriemoduls 1 angeordnet, während der Kühlmittelauslass 12 im oberen Teil ausgebildet ist. Der Kühlmitteleinlass 11 und der Kühlmittelauslass 12 sind jeweils als runde Bohrung mit einem Kragen ausgebildet. In diese wird ein Verbindungsstück eingebracht, um einen Anschluss an das Kühlmittelsystem zu ermöglichen. Bevorzugt sind die Verbinder derart ausgebildet, dass das Kühlmittelsystem mit einem Schnellverschluss angeschlossen werden kann. Alternativ können einzelne Anschlüsse für das Kühlmittel auch mit einem Verschluss, z. B. einem dichtenden Stopfen, Blindstopfen oder einem anderen geeigneten Verschluss verschlossen werden. Wird die Batterie als einzelne Energiequelle verwendet, so wird an der Vorderseite 8 der Kühlmitteleinlass 11 mit dem Kühlmittelsystem verbunden. Der Kühlmittelauslass 12 an der Vorderseite 8 wird mit einem Stopfen verschlossen. Auf der Rückseite wird der Kühlmitteleinlass 11 mit einem Stopfen verschlossen, während der Kühlmittelauslass 12 an das Kühlmittelsystem angeschlossen wird. Auf diese Weise wird ein einheitlicher und gleichmäßiger Fluss des Kühlmittels durch das Batteriemodulgehäuse 2 gewährleistet.

Werden mehrere Batterien fluidisch zusammengekoppelt, so wird in dem Kühlmitteleinlass 11 und dem Kühlmittelauslass 12 auf jeder Seite ein Verbindungsstück oder Verbinder eingesetzt, das dichtend zum Kühlmitteleinlass 11 bzw. Auslass 12 abschließt. Die Verbinder können beispielsweise ein sogenannter plug-and-seal-Verbinder sein, wie er von der Firma Freudenberg hergestellt wird. Ein derartiger Verbinder ist ein zylindrisches Rohr, das mit einer Kunststoffummantelung, beispielsweise Gummierung versehen ist und sowohl die fluidische Verbindung zwischen zwei benachbarten Batteriemodulen 1 herstellt als auch eine Dichtung gegenüber der Umgebung. Auf diese Weise werden der Verteilkanal 23 und der Sammelkanal 24 zweier Batterien 1 miteinander gekoppelt. Auch hier wird von der ersten Batterie 1 der Kühlmittelauslass 12 an der Vorderseite 8 mit einem Stopfen verschlossen. Bei der letzten Batterie der zusammengekoppelten Reihe aus Batterien wird der Kühlmitteleinlass 11 an der Rückseite 10 verschlossen. Der Kühlmitteleinlass 11 auf der Vorderseite 8 der ersten Batterie wird an das Kühlmittelsystem angeschlossen, ebenso wie der Kühlmittelauslass 12 an der Rückseite 10 der letzten Batterie 1.

Fig. 8b zeigt die Rückseite des Batteriemoduls 1. Das Spannband 4 ist jeweils mit seinen beiden Enden verschlossen. In der hier gezeigten Ausführungsform sind die Enden des Spannbands 4 miteinander gecrimpt. Das Crimpen erfolgt bevorzugt mit einem Werkzeug, beispielsweise einer speziellen Crimpzange. Auf diese Weise lässt sich das Spannband 4 schnell und einfach verschlie-ßen, wobei die geforderte Spannung des Spannbands 4 erzielt werden kann. Bei einem automatisierten Verschließen des Spannbands kann dies durch ein automatisches Werkzeug erfolgen.

Der Deckel 45 schließt dichtend mit dem Batteriegehäuse 2 ab. An seiner Frontseite (Fig. 8a) weist der Deckel 45 einen Elektronikanschluss 74 auf, so dass die Batteriesteuerelektronik 47 mit einer externen Ansteuereinheit oder mit anderen Batteriesteuerelektroniken von weiteren Batteriemodulen verbunden werden kann.

Seitlich am Deckel 45 ist eine Anschlussvorrichtung 75 angeordnet, die im Fehlerfall aus den Batteriezellen 5 entweichende Gase aufnimmt und in eine Sammelvorrichtung führt, in der die Gase absorbiert, neutralisiert oder gelagert werden können.

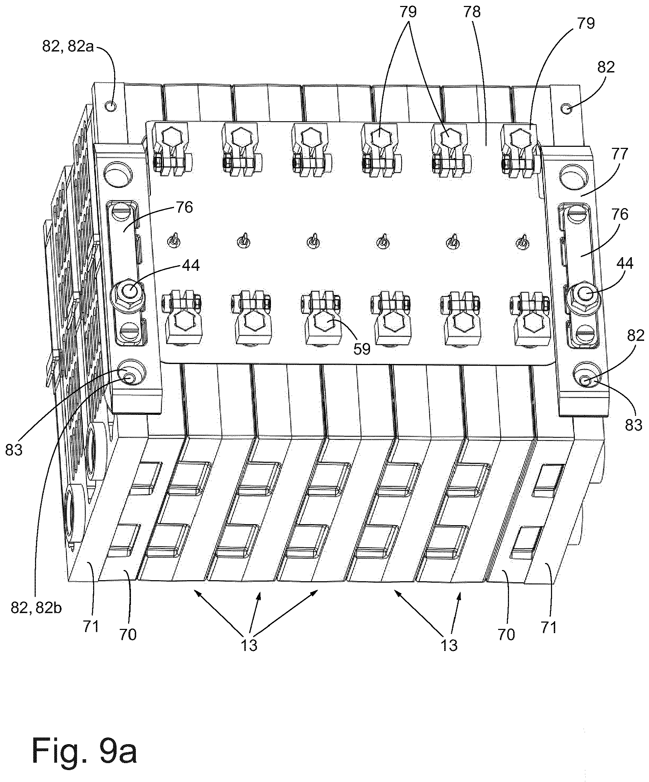

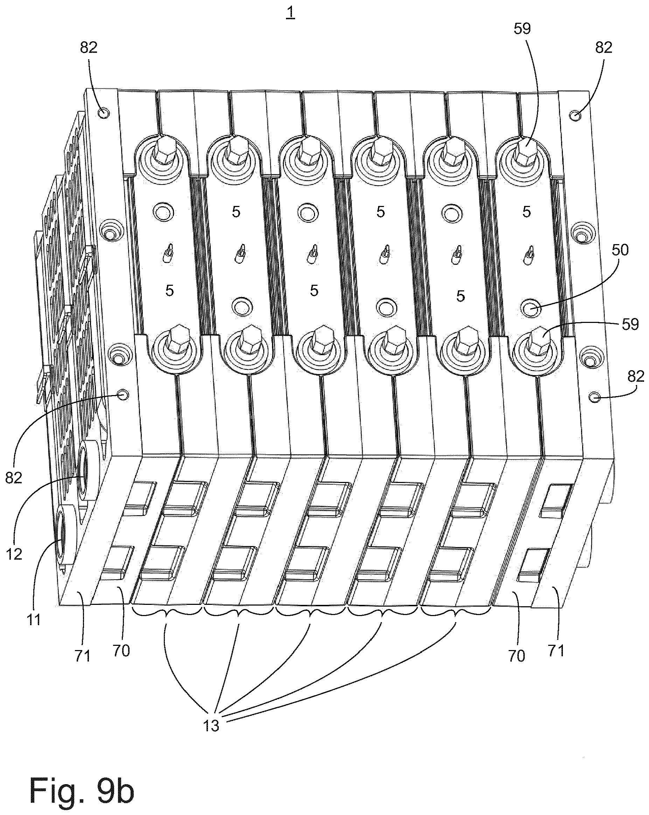

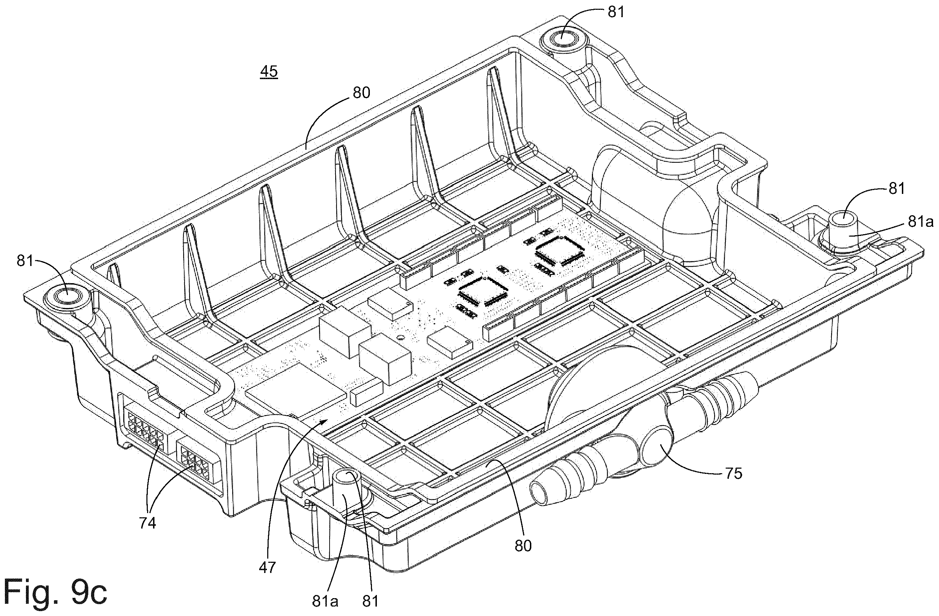

Die Figuren 9a und 9b zeigen das Batteriemodul 1 mit abgehobenem Deckel 45. Figur 9b zeigt die sechs Batteriezellen 5 mit ihren elektrischen Anschlüssen 59, den Berstscheiben 50 sowie den Elektrolyt-Befüllanschlüssen 46. Figur 9c zeigt den Deckel 45.

Eine Abdeckfolie 78, die der Abdeckplatte 48 der ersten Ausführungsform entspricht, deckt die Oberseite der Batteriezellen 5 ab. Sie weist mehrere Aussparungen auf, durch die sich die elektrischen Anschlüsse 59 der Batteriezellen 5 erstrecken. Die Abdeckfolie 78 isoliert elektrisch gegenüber der Umgebung. Optional können in der Abdeckfolie 78 weitere Aussparungen vorgesehen sein, die bevorzugt mit den Berstscheiben 50 der Batteriezellen 5 korrespondieren, so dass im Fehlerfall bei einer sich öffnenden Berstscheibe 50 die entstehenden Gase aus den beschädigten Batteriezellen 5 in das Innere des Deckels 45 entweichen können. Sind keine Aussparungen vorgesehen, entweichen die Gase unterhalb der Abdeckfolie 78 über deren Ränder, da die Abdeckfolie 78 lediglich auf den Batteriezellen 5 und den Oberseiten der Zwischenwände 13 aufliegt.

Die austretenden Gase werden von dem Batteriedeckel 45 eingeschlossen, da der Deckel 45 dichtend mit dem Batteriegehäuse 2 verbunden ist. Dazu ist eine Dichtung 80 an seiner Unterseite vorgesehen, wie in Figur 9c gezeigt.

Die Außenwände 71 des Batteriegehäuses 2 weisen an ihrer Oberseite mehrere Bohrungen auf, um eine elektrische Anschlussplatte 76 anzuschrauben. Die Anschlussplatte 76 ist bevorzugt eine Kupferschiene und umfasst den elektrischen Anschluss 44, um die Batteriespannung abzugreifen. Die Anschlussplatte 76 wird von einem Haltestück 77 aus Kunststoff umrahmt, um eine elektrische Isolierung zu schaffen. Die einzelnen Batteriezellen 5 werden über die Anschlussklemmen 79 miteinander in Reihe geschaltet. Eine der Kupferschienen 76 wird mit der Anschlussklemme 79 der ersten Batteriezelle 5 der Reihenschaltung verbunden. Die andere Kupferschiene 76 wird mit der Anschlussklemme 79 der letzten Batteriezelle 5 der Reihenschaltung am entgegengesetzten Batteriepol, bezogen auf die erste Batteriezelle, verbunden.

Der Batteriedeckel 45 wird mit dem Batteriegehäuse 2 verschraubt, wobei Schrauben durch Halteöffnungen 81 am Deckel 45 in Haltebohrungen 82 in der Außenwand 71 eingeschraubt werden. Zwei Schrauben werden direkt in die Haltebohrungen 82a geschraubt. Zwei weitere Schrauben werden durch Durchgangsöffnungen 83 im Haltestück 77 in die Haltebohrungen 82b in der Außenwand 71 eingeschraubt. Die Halteöffnungen 81 am Deckel weisen dazu zylindrische Flansche 81 a auf, die in die Durchgangsöffnung 83 hineinragen. Bevorzugt sind die Halteöffnungen 81 im Deckel 45 mit einer Metallhülse verstärkt.

Bevorzugt umfasst die in Figur 9c gezeigte Anschlussvorrichtung 75 zur Entgasung ein Rückschlagventil, so dass Gase aus dem Deckel austreten, jedoch nicht in den vom Deckel 45 gebildeten Hohlraum hineingelangen können. Dieser Aspekt ist wichtig, damit bei der Zusammenschaltung mehrerer Batteriemodule 1 bei einem fehlerhaften Batteriemodul 1 die entweichenden Gase nicht zu den funktionierenden, fehlerfreien Batteriemodulen 1 geleitet werden und dort zu Beschädigungen führen.

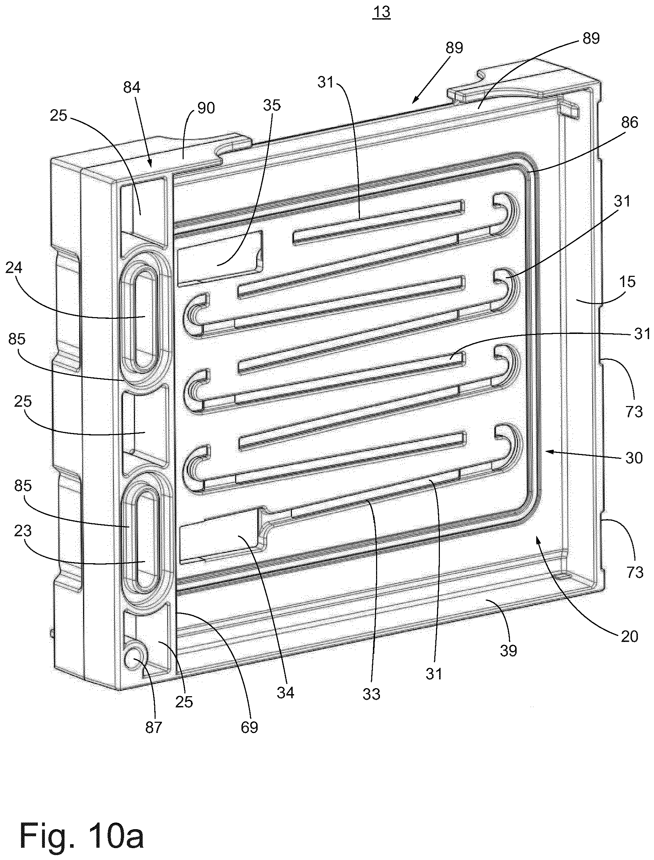

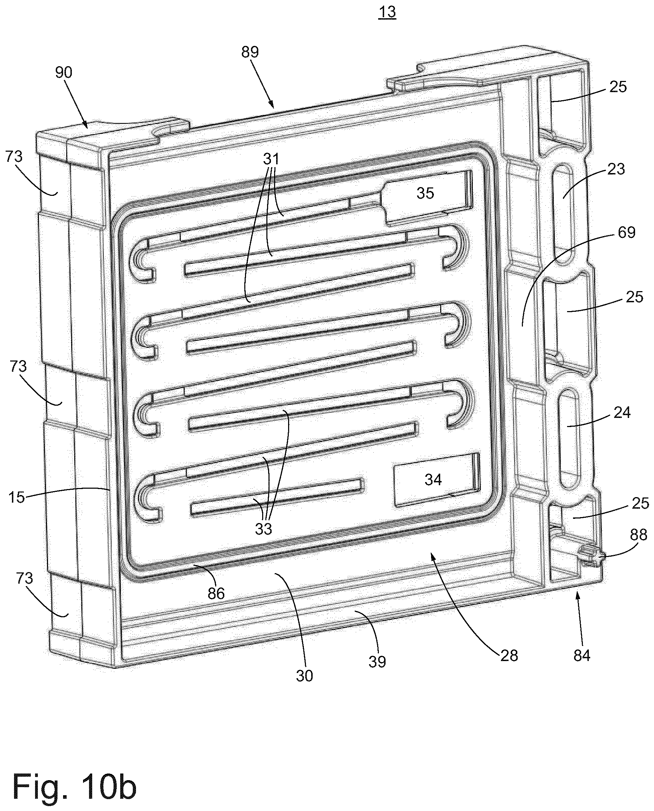

Die Figuren 10a und 10b zeigen eine Zwischenwand 13 von vorne bzw. von hinten. Der im Kühlbereich 30 angeordnete Kühlkanal 31 ist mäanderförmig ausgebildet. Die Mäander sind im Gegensatz zur ersten Ausführungsform gleich; der Abstand der einzelnen Mäander ist hier konstant. Am vorderen Ende 34 weist der Kanal 31 eine Verbindung zum Verteilkanal 23 auf, während am hinteren Ende 35 eine Verbindung zum Sammelkanal 24 besteht. Das Kühlmittel fließt von dem bevorzugt im unteren Teil der Zwischenwand 13 angeordneten vorderen Ende 34 durch den Kanal 31 zu dem hinteren Ende 35, das bevorzugt im oberen Teil der Zwischenwand angeordnet ist. Bevorzugt ist das hintere Ende 35 jedenfalls näher an der Oberseite 90 der Zwischenwand 13 angeordnet als das vordere Ende 34. Der Kanal 31 ist in dieser bevorzugten Ausführungsform eine beidseitig offene Ausnehmung 33. Er kann alternativ auch einseitig offen sein.

In einem Verteilbereich 84 für das Kühlmittel sind neben dem Verteilkanal 23 und dem Sammelkanal 24 auch die drei Durchgangsausnehmungen 25 angeordnet, durch die das Spannband 4 geführt wird. An der Vorderseite 20 der Zwischenwand 13 weisen der Verteilkanal 23 und der Sammelkanal 24 je eine umlaufende Nut 85 zur Aufnahme einer Dichtung auf. Die Dichtung stellt sicher, dass der Verteilkanal 23 und der Sammelkanal 24 zwischen zwei benachbarten Zwischenwänden 13 abgedichtet ist, so dass kein Kühlmittel oder Fluid (weder Gas noch Flüssigkeit) entweichen kann. Der Verteilbereich 84 bei einer Anordnung der Batteriezellen 5 in einer Reihe entspricht bevorzugt dem Mittelteil 14 bei einer zweireihigen Anordnung der Zellen 5.

An der Rückseite 28 (Figur 10b) ist die Wandung des Verteilkanals 23 und des Sammelkanals 24 plan, so dass eine in der Dichtungsnut 85 angeordnete Dichtung dichtend mit der planen Oberseite der Wandung abschließen kann.

Im Kühlbereich 30 ist eine umlaufende Erhebung 86 in Form eines flachen Walls vorgesehen, der den Kanal 31 umrahmt. Die hier nicht gezeigte Kunststofftrennschicht wird an der Vorderseite 20 und an der Rückseite 28 der Zwischenwand 13 angelegt und so positioniert, dass die Kunststofftrennschicht 38 die beidseitig offene Ausnehmung 33 abschließt. Sie liegt an der Erhebung 86 an und wird mit dieser dichtend verbunden, z. B. verschweißt. Während des Verschweißens schmilzt die Erhebung 86 derart, dass die Kunststofftrennschicht 38 im Wesentlichen plan und direkt an der Vorderseite 20 bzw. der Rückseite 28 anliegt. Auf diese Weise wird sichergestellt, dass das Kühlmittel (Kühlfluid) in den Kanal 31 geführt wird und nicht aus dem Kanal 31 entweichen kann. Die Erhebung 86 ist vor dem Verbinden mit der Kunststofftrennschicht 38 bevorzugt höchstens 5 mm, besonders bevorzugt höchstens 3 mm und sehr bevorzugt höchstens 1 mm hoch. Nach dem Verschweißen ist die Erhebung 86 praktisch plan.

An der Vorderseite 20 der Zwischenwand 13 ist im Verteilbereich 84 eine Positionieraufnahme 87 vorgesehen, die bevorzugt in der unteren äußeren Ecke angeordnet ist. Die Positionieraufnahme 87 ist bevorzugt eine Sackbohrung, in die ein korrespondierender Positionierstift 88 hineinragt. Der Positionierstift 88 ist an der Rückseite 28 der Zwischenwand 13 angeordnet (vgl. Figur 10b).

Auch in dieser zweiten Ausführungsform sind die Zwischenwände 13 derart angeordnet, dass eine Zwischenwand 13 zwischen zwei benachbarten Batteriezellen 5 angeordnet werden kann. Die Zwischenwandseitenwand 15, die innere Seitenwand des Verteilbereichs 84, der Zwischenwandboden 39 und die Zwischenwandoberseite 90 sind Halteelemente für die Batteriezelle 5. Sie bilden gemeinsam eine Haltestruktur, hier einen Rahmen, so dass eine an der Zwischenwand 13 angeordnete Batteriezelle 5 an ihren Seiten wenigstens teilweise eingerahmt wird. Eine Ausnehmung 89 in der Zwischenwandoberseite 90 gewährleistet die Zugänglichkeit der elektrischen Anschlüsse der Batteriezelle 5. Zwei aneinander anliegende Zwischenwände 13 bilden also gemeinsam eine Umhüllung für eine Batteriezelle 5. So entsteht eine elektrische Isolierung durch den Kunststoff der Zwischenwände 13 gegenüber der Umgebung.

Die Figuren 11a bis 11d zeigen eine Abschlusswand 70 im Detail, wobei die Figuren 11a bis 11c eine vordere Abschlusswand 70 und die Figur 11d eine hintere Abschlusswand 70 darstellen.

Im Gegensatz zu der Zwischenwand 13 ist der Kanal 31 im Kühlbereich 30 durch eine einseitig offene Ausnehmung 33 gebildet. Da die Abschlusswand 70 im Batteriegehäuse 2 die äußere fluidisch durchströmte Wand darstellt, kontaktiert sie nur auf einer Seite eine Batteriezelle und wird nur zur Kühlung einer Batteriezelle 5 eingesetzt. An der anderen Seite der Abschlusswand 70 schließt sich eine Außenwand 71 (siehe Fig.12a, 12b) an.

Der Aufbau der Innenseite (Vorderseite 20) entspricht dem Aufbau der Vorderseite 20 der Zwischenwand 13. Die Kanalstruktur 32 wird ebenfalls mit einer Kunststofftrennschicht 38 abgedeckt und dichtend verschweißt, so dass keine Flüssigkeit aus dem Kanal 31 austreten kann. Die verschweißte, mit einer Kunststofftrennschicht 38 versehene Abschlusswand 70 ist in Figur 11 b dargestellt.

Im Verteilbereich 84 sind der Verteilkanal 23 und der Sammelkanal 24 jeweils ohne Dichtungsnut ausgeführt. Die Dichtung zum Abdichten ist in der benachbarten Zwischenwand vorgesehen. Im unteren Bereich des Verteilbereichs 84 ist ein Positionierstift 88 angeordnet.

Figur 11c zeigt die Rückseite 28 der vorderen Abschlusswand 70. Im Verteilbereich 84 sind der Verteilkanal 23 und Sammelkanal 24 auch jeweils ohne Dichtungsnut ausgebildet. Zur Abdichtung trägt die benachbarte Außenwand 71 eine Dichtung in ihrer Dichtungsnut. Im unteren Bereich ist ebenfalls ein Positionierstift 88 vorhanden, um in eine entsprechende Ausnehmung der Au-ßenwand 71 einzugreifen. In dem Kühlbereich 30 sind keine Kühlkanäle angeordnet, da die Kanäle 31 lediglich zur Vorderseite 20 hin offen sind. Die Rückseite 28 ist im Wesentlichen plan und weist zwei Vorsprünge oder Erhebungen auf, wobei der untere Vorsprung 94 mit dem vorderen Ende 34 des Kanals 31 korrespondiert und der obere Vorsprung 95 mit dem hinteren Ende 35 des Kanals 31. Die Vorsprünge dienen dazu, das vordere Ende 34 bzw. hintere Ende 35 gegenüber der Rückseite 28 der Abschlusswand 70 abzudichten.

Die in Figur 11d dargestellte hintere Abschlusswand 70 unterscheidet sich zur vorderen Abschlusswand 70 nur dadurch, dass an der Vorderseite im Verteilbereich 85 kein Positionierstift, sondern eine Positionieraufnahme 87 vorgesehen ist. Der Sammelkanal 24 wie auch der Verteilkanal 23 weisen an ihrer Wandung jeweils eine Dichtungsnut 85 auf. Ansonsten sind die vordere und die hintere Abschlusswand 70 gleich. Auch die hintere Abschlusswand 70 wird mit einer hier nicht dargestellten Kunststofftrennschicht im Kühlbereich 30 abgedichtet, so dass der einseitig offene Kanal 31 an der offenen Seite verschlossen wird.

Die Figuren 12a und 12b zeigen jeweils eine Außenwand von der Innenseite bzw. Außenseite. Im Gegensatz zu der Abschlusswand 70 gibt es nur eine Ausführung der Außenwand 71, die sowohl am vorderen Ende wie auch am hinteren Ende des Batteriegehäuses 2 angeordnet wird. Aus diesem Grund weist die Außenwand 71 an ihrer Innenseite 91 im Verteilbereich 84 in beiden Ecken eine Positionieraufnahme 87 auf, in die der Positionierstift 88 der Abschlusswand 70 positioniert wird. Sowohl für den Verteilkanal 23 wie auch für den Sammelkanal 24 ist die Wandung jeweils mit einer Dichtungsnut 85 versehen, damit die Kanäle zwischen der Abschlusswand 70 und der Außenwand 71 abgedichtet werden können, so dass kein Kühlfluid entweichen kann.

An der Innenseite 91 sind zwei Ausnehmungen 92, 93 angeordnet, die mit den Vorsprüngen 94, 95 der Abschlusswand 70 korrespondieren. So können sich die Abschlusswand 70 und die Außenwand 71 jeweils (plan) kontaktieren.

In Figur 12b ist die Außenseite 96 der Außenwand 71 im Detail dargestellt. Sowohl der Verteilkanal 23 wie auch der Sammelkanal 24 gehen jeweils in eine runde Buchse über, die den Kühlmitteleinlass 11 und den Kühlmittelauslass 12 bilden. Zur Führung des Spannbandes sind die Führungsabrundungen 72 an der Außenseite sowie an den Durchgangsausnehmungen 25 zu erkennen.

Mehrere Längsschlitze 97 an der Außenseite 96 dienen zum einen der Gewichtsersparnis oder sind herstellungsbedingt, wenn die Außenwand 71 z. B. aus Kunststoff besteht. Wenn die Außenwand 71 in ihrer bevorzugten Ausführungsform aus Aluminium oder einem anderen Metall hergestellt ist, kann das Gewicht deutlich reduziert werden. Durch die Verwendung von Aluminium wird eine erhöhte Stabilität gewährleistet. Die Außenwand 71 weist in der Regel eine Dicke von höchstens 20 mm, bevorzugt höchstens 15 mm, weiter bevorzugt höchstens 12 mm, sehr bevorzugt höchstens 10 mm und besonders bevorzugt höchstens 8 mm auf. Die Längsschlitze 97 haben bevorzugt eine Tiefe von mindestens 1 mm, bevorzugt mindestens 3 mm, weiter bevorzugt mindestens 5 mm, weiter bevorzugt mindestens 7 mm, besonders bevorzugt mindestens 9 mm. Die Tiefe der Längsschlitze 97 ist höchstens gleich der Dicke der Außenwand 71.

Zum anderen dienen die Längsschlitze 97 auch zur Aufnahme eines Befestigungsadapters, mit dem die Batterie 1 beispielsweise an einem Bodenblech oder an einer anderen Vorrichtung befestigt werden kann. Der Befestigungsadapter kann beispielsweise kammartig sein, mit Zinken, die in die Längsschlitze 97 eingreifen. Werden mehrere Batterien 1 zusammengekoppelt, wird dieses Adapterstück zur Befestigung zweier miteinander verkoppelter Batterien verwendet, damit sie in ihrer Position gehalten werden. So wird sichergestellt, dass ein Verbindungsstück, das in dem Kühlmitteleinlass 11 bzw. dem Kühlmittelauslass 12 angeordnet ist und zwei benachbarte Batteriegehäuse 2 miteinander verbindet, dichtend in seiner Position verbleibt und kein Kühlmittel austritt.

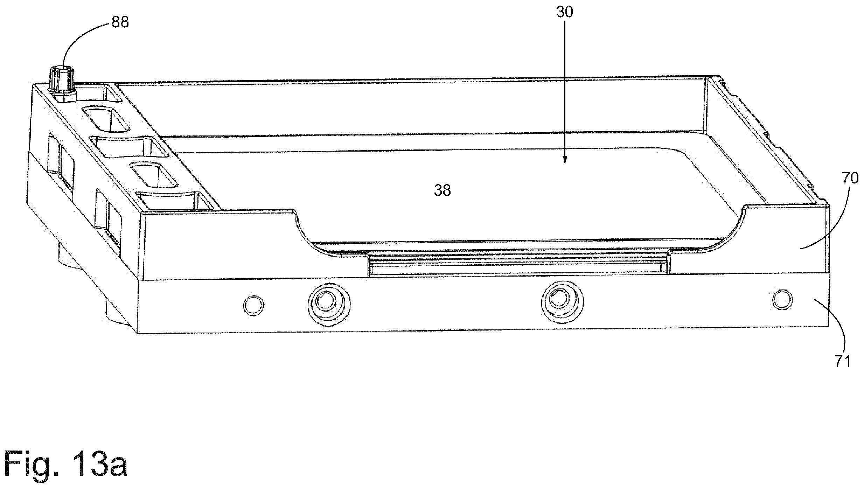

Die Figuren 13a bis 13d zeigen die ersten Schritte des Herstellungsprozesses einer Batterie 1 mit einem Batteriegehäuse 2, bei der die Batteriezellen 5 einreihig angeordnet sind. Die Herstellung kann automatisiert erfolgen, z. B. vollautomatisch oder teilautomatisch mit manuellen Eingriffen.

Im ersten Schritt gemäß Figur 13a wird auf einer für die Herstellung bevorzugt horizontal angeordneten Außenwand 71 eine vordere Abschlusswand 70 positioniert. Dabei erstreckt sich der Positionierstift 88 der Abschlusswand 70 in die Positionieraufnahme der Außenwand. Die Abschlusswand 70 wird schon vor der Montage mit einer Kunststofftrennschicht 38 versehen, so dass der Kanal im Kühlbereich 30 abgedichtet ist.

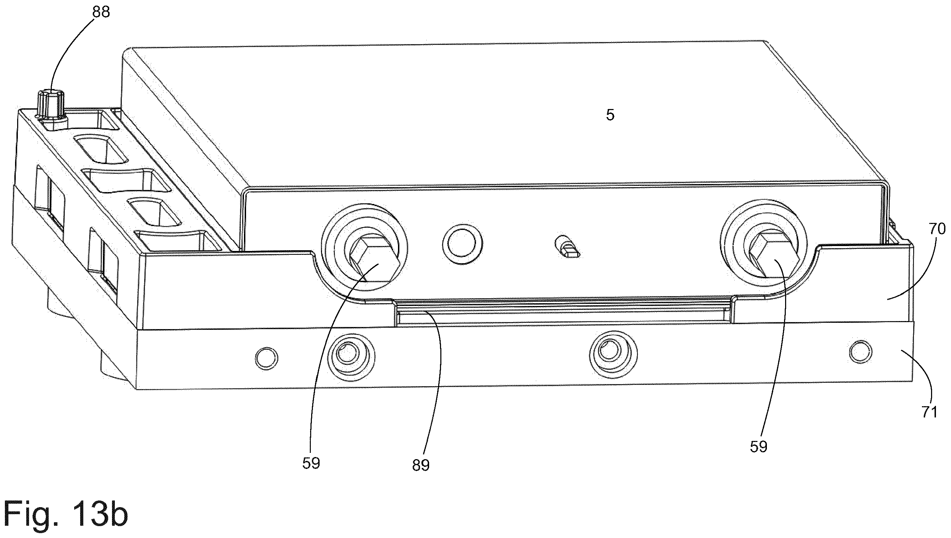

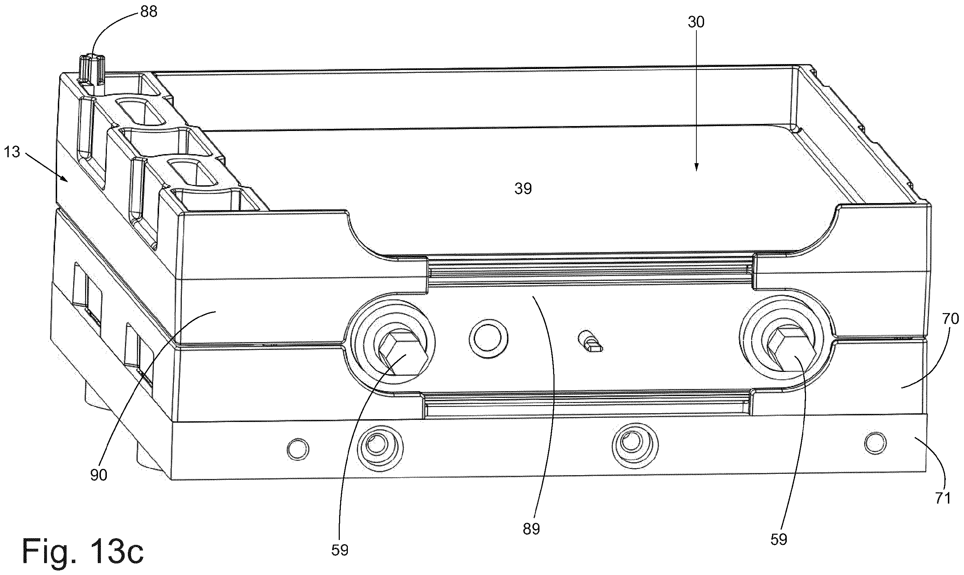

In einem weiteren Schritt gemäß Figur 13b wird eine Batteriezelle 5 im Kühlbereich 30 der Abschlusswand 70 derart positioniert, dass ihre elektrischen Anschlüsse 59 im Bereich der Ausnehmung 89 der Abschlusswand 70 angeordnet sind. Im nächsten Schritt gemäß Figur 13c wird eine Zwischenwand 13 auf die Batteriezelle 5 aufgesetzt, wobei die Positionieraufnahme 87 mit dem Positionierstift 88 der Abschlusswand 70 in Eingriff kommt. Die eine Ausnehmung 89 der Zwischenwandoberseite 90 lässt ebenfalls die elektrischen Anschlüsse 59 der Batteriezelle 5 frei. Somit wird die Batteriezelle 5 von der Abschlusswand 70 und der Zwischenwand 13 umhüllt, bis auf einen durch die beiden Ausnehmungen 89 gebildeten offenen Bereich.

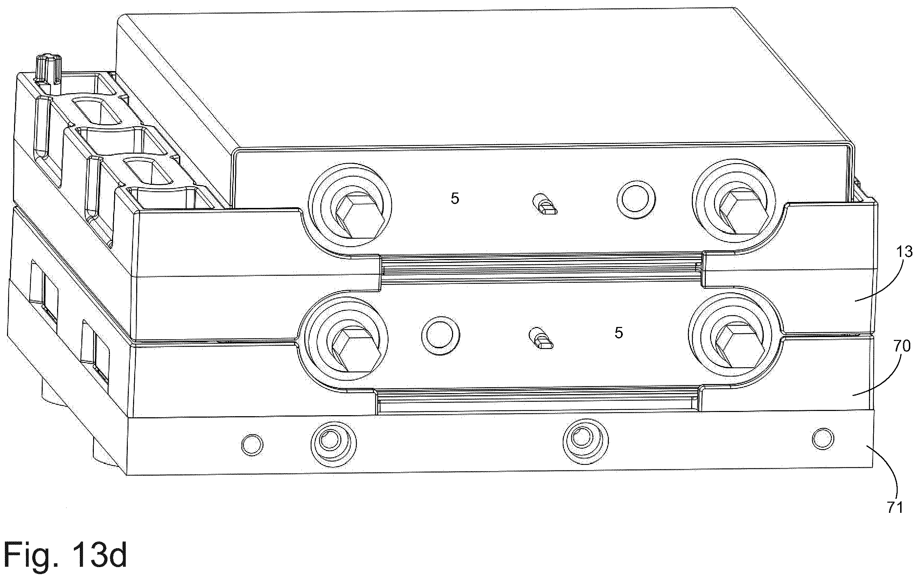

Im nächsten Schritt (Fig. 13d) wird nun eine weitere Batteriezelle 5 auf den Kühlbereich 30 der Zwischenwand 13 positioniert. Es folgen weitere Zwischenwände 30 und weitere Batteriezellen im Wechsel, bis am Ende des Prozesses die letzte Batteriezelle 5 mit einer Abschlusswand 70 und einer darauf folgenden Außenwand 71 versehen wird. Im Anschluss werden die Spannbänder 4 durch die Durchgangsöffnungen 25 geführt und verschlossen, so dass sie das so hergestellte Batteriegehäuse 2 umschließen. Die Batteriezellen 5 werden mit einer Abdeckfolie 78 abgedeckt und die Anschlussklemmen 79 montiert. Nach Montage der elektrischen Anschlussplatten 76 und Haltestücke 77 kann der Deckel montiert werden.

## Patentansprüche

1. Batteriemodul umfassend ein Batteriemodulgehäuse mit Teilen aus Kunststoff und mehrere prismatische Batteriezellen, die ein Zellgehäuse mit vier Seitenwänden aufweisen, wobei zwei parallele Seitenwände größer sind als die beiden anderen Seitenwände,
wobei
- das Batteriemodulgehäuse (2) ein Kühlsystem mit einer Kanalstruktur (32) und einem fluiden Kühlmittel umfasst,
- die Kanalstruktur (32) mit einem Kühlmitteleinlass (11) und einem Kühlmittelauslass (12) des Batteriemodulgehäuses (2) in Fluidverbindung steht,
- zwischen zwei benachbarten Batteriezellen (5) eine Zwischenwand (13) aus Kunststoff parallel zu den größeren Seitenwänden (7) der Batteriezelle (5) angeordnet ist,
- ein Kanal (31) der Kanalstruktur (32) wenigstens teilweise in der Zwischenwand (13) verläuft und mittels einer Ausnehmung (33) der Zwischenwand (13) gebildet ist, die mindestens zu einer benachbarten Seitenwand (7) der Batteriezelle (5) hin offen ist,
- zwischen der Seitenwand (7) der Batteriezelle (5) und der Zwischenwand (13) eine Kunststofftrennschicht (38), deren Material bevorzugt verschieden ist von dem Material der Zwischenwand (13) und deren Dicke geringer ist als die Dicke der Zwischenwand (13), derart angeordnet ist, dass der mittels der Ausnehmung (33) gebildete Kanal (31) des Kühlsystems durch die Kunststofftrennschicht (38) geschlossen ist.
- die Zwischenwand (13) einen Zwischenwandboden (39) umfasst, der wenigstens teilweise unter die Batteriezellen (5) ragt und bevorzugt gemeinsam mit anderen Zwischenwandböden (39) den Boden des Batteriemodulgehäuses (2) bildet, wobei die Zwischenwandböden (39) bevorzugt derart korrespondieren, dass sie ineinandergreifen und besonders bevorzugt miteinander verrasten.

2. Batteriemodul nach Anspruch 1, **dadurch gekennzeichnet, dass** die Zwischenwand (13) eine Zwischenwandseitenwand (15) aufweist, die Teil einer Seitenwand (9) des Batteriemodulgehäuses (2) ist.

3. Batteriemodul nach Anspruch 1 oder 2, **dadurch gekennzeichnet, dass** die Zwischenwand (13) Halteelemente zur Halterung einer benachbarten Batteriezelle (5) umfasst, wobei die Halteelemente bevorzugt wenigstens Teile einer Zwischenwandseitenwand (15), eines Zwischenwandbodens (39) und/oder einer Oberseite (90) der Zwischenwand (13) sind.

4. Batteriemodul nach einem der vorhergehenden Ansprüche, **dadurch gekennzeichnet, dass** der Elektrolyt der Batteriezellen bevorzugt auf SO₂ basiert.

5. Batteriemodul nach einem der vorhergehenden Ansprüche, **dadurch gekennzeichnet, dass** der Kunststoff der Batteriemodulgehäuseteile faserverstärkt, bevorzugt glasfaserverstärkt und besonders bevorzugt ein glasfaserverstärkter Polyamid ist.

6. Batteriemodul nach einem der vorhergehenden Ansprüche, **dadurch gekennzeichnet, dass** der Kunststoff der Batteriemodulgehäuseteile thermoplastisch ist, insbesondere der Kunststoff der Zwischenwand (13).

7. Batteriemodul nach einem der vorhergehenden Ansprüche, **dadurch gekennzeichnet, dass** die Dicke der Zwischenwand (13) höchstens 20 mm, bevorzugt höchstens 10 mm, weiter bevorzugt höchstens 7 mm, weiter bevorzugt höchstens 5 mm, besonders bevorzugt höchstens 4 mm und sehr bevorzugt 3 mm beträgt.

8. Batteriemodul nach einem der vorhergehenden Ansprüche, **dadurch gekennzeichnet, dass** die Ausnehmung (33) der Kanalstruktur (32) in der Zwischenwand (13) mäanderförmig ausgebildet ist und sich der Mäander von einem unteren Bereich der Zwischenwand (13) bis in einen oberen Bereich der Zwischenwand (13) erstreckt.

9. Batteriemodul nach einem der vorhergehenden Ansprüche, **dadurch gekennzeichnet, dass** sich die Ausnehmung (33) der Kanalstruktur (32) über die gesamte Dicke der Zwischenwand (13) erstreckt und zu den beiden benachbarten Seitenwänden (7) der Batteriezellen (5) hin offen ist.

10. Batteriemodul nach einem der vorhergehenden Ansprüche, **dadurch gekennzeichnet, dass** die Dicke der Kunststofftrennschicht (38) höchstens 20 %, bevorzugt höchstens 10 %, besonders bevorzugt höchstens 5 % der Dicke der Zwischenwand (13) beträgt.

11. Batteriemodul nach einem der vorhergehenden Ansprüche, **dadurch gekennzeichnet, dass** die Dicke der Kunststofftrennschicht höchstens 1 mm, bevorzugt höchstens 0,5 mm, sehr bevorzugt höchstens 0,1 mm beträgt.

12. Batteriemodul nach einem der vorhergehenden Ansprüche, **dadurch gekennzeichnet, dass** mehrere Batteriezellen (5) und die dazwischen angeordneten Zwischenwände (13) von einer Spannvorrichtung (3), bevorzugt aus Metall, umfasst sind, die während des Betriebs von den Batteriezellen (5) ausgeübte Kräfte aufnimmt.

13. Batteriemodul nach einem der vorhergehenden Ansprüche, **dadurch gekennzeichnet, dass** der Kühlmitteleinlass (11) und/oder der Kühlmittelauslass (12) eine Schnellkupplung (58) zum einfachen, werkzeuglos betätigbaren Anschluss an ein externes Kühlsystem umfasst.

14. Batteriemodul nach einem der vorhergehenden Ansprüche, **dadurch gekennzeichnet, dass** das Batteriemodulgehäuse (2) eine obere Abdeckplatte (48) aufweist, die oberhalb der Batteriezellen (5) quer zu den Seitenwänden (9) des Batteriemodulgehäuses (2) angeordnet ist und die eine Befüllanschlussöffnung (52) für einen Elektrolyt-Befüllanschluss (46) zum Befüllen der Batteriezellen (5) mit dem Elektrolyten aufweist, wobei die Abdeckplatte (48) an ihrer Oberseite eine muldenartige Vertiefung (61) hat, die an die Befüllanschlussöffnung (52) angrenzt.

15. Batteriemodul nach einem der vorhergehenden Ansprüche, **dadurch gekennzeichnet, dass** die Zwischenwand (13) an ihren kurzen seitlichen Stirnseiten je eine Zwischenwandseitenwand (15) aufweist, die die kleinen Seitenwände (7b) des Zellgehäuses (6) wenigstens teilweise überragen und die bevorzugt gemeinsam mit anderen Zwischenwandseitenwänden (15) eine Batteriemodulgehäuseseitenwand (9) bilden, wobei die Zwischenwandseitenwände (15) bevorzugt derart miteinander korrespondieren, dass sie ineinandergreifen und besonders bevorzugt miteinander verrasten.

16. Batteriemodul nach einem der vorhergehenden Ansprüche, **dadurch gekennzeichnet, dass** der Zwischenwandboden (39) gemeinsam mit anderen Zwischenwandböden (39) den Boden des Batteriemodulgehäuses (2) bildet, wobei die Zwischenwandböden (39) bevorzugt derart korrespondieren, dass sie ineinandergreifen und besonders bevorzugt miteinander verrasten.

17. Batteriemodul nach einem der vorhergehenden Ansprüche, **dadurch gekennzeichnet, dass**
- das Batteriemodulgehäuse (12) zwei Endwände (8, 10) umfasst, die im Wesentlichen parallel zu den größeren Seitenwänden (7) der Batteriezellen (5) angeordnet sind;
- die Endwände (8, 10) einen zu ihren Innenseiten hin offenen Kanal (31) aufweisen, der Teil der Kanalstruktur (32) ist;
und
- eine Endwand (8, 10) die Rückwand (10) und die andere Endwand (8, 10) die Vorderwand (8) ist und an der Vorderwand (8) bevorzugt der Kühlmitteleinlass (11) und/oder der Kühlmittelauslass (12) angeordnet ist.

18. Batteriemodul nach Anspruch 17, **dadurch gekennzeichnet, dass** die Endwände (8, 10) an ihren Außenseiten rippenartige Verstärkungen (41) aufweisen, die bevorzugt Quer- und Längsstreben umfassen.

19. Batteriemodul nach Anspruch 17, **dadurch gekennzeichnet, dass** die Endwand (8, 10) eine Abschlusswand (70) und eine Außenwand (71) umfasst,
wobei
- die Abschlusswand (70) an ihrer Innenseite einen einseitig offenen Kanal (31) aufweist, der Teil der Kanalstruktur (32) ist;
- die Außenseite der Abschlusswand (70) bevorzugt im wesentlichen plan ist,
- die Abschlusswand (70) bevorzugt ein Positionierelement zu Fixierung der Relativposition gegenüber der Außenwand (71) und/oder der Zwischenwand (13) aufweist;
- die Außenwand (71) an ihrer Außenseite bevorzugt längliche Ausnehmungen (87) aufweist und bevorzugt aus Metall, besonders bevorzugt aus Aluminium besteht.

20. Verwendung des Batteriemoduls nach einem der vorhergehenden Ansprüche
- in einem Fahrzeug,
- zur Energiespeicherung und Einspeisung in das Mittel- und/oder Niederspannungsnetz,
- zur dezentralen Energiespeicherung in Kombination mit Anlagen zur Gewinnung regenerativer Energien,
- als unterbrechungsfreie Stromversorgung (USV) oder Notstromversorgung; oder
- zur Stabilisierung von Inselnetzen.

21. Fahrzeug umfassend ein Batteriemodul nach einem der vorhergehenden Ansprüche 1 bis 19.

## Claims

1. Battery module comprising a battery module housing with parts made of plastic and a plurality of prismatic battery cells that have a cell housing with four side walls, two parallel side walls being larger than the two other side walls,
wherein
- the battery module housing (2) has a cooling system with a channel structure (32) and a fluid coolant,
- the channel structure (32) has a fluid connection with a coolant inlet (11) and a coolant outlet (12) of the battery module housing (2),
- an intermediate wall (13) made of plastic is located between two adjacent battery cells (5) essentially parallel to the larger side walls (7) of the battery cell (5),
- one channel (31) of the channel structure (32) runs at least partially in the intermediate wall (13) and is formed by means of a recess (33) in the intermediate wall (13) that is open at least to one adjacent side wall (7) of the battery cell (5),
- a plastic separating layer (38), whose material is preferably different to the material of the intermediate wall (13) and whose thickness is less than the thickness of the intermediate wall (13), is arranged between the side wall (7) of the battery cell (5) and the intermediate wall (13) in such a manner that the channel (31) of the cooling system formed by the recess (33) is closed by the plastic separating layer (38),
- the intermediate wall (13) has an intermediate wall base (39), which projects at least partially under the battery cells (5) and preferably forms the base of the battery module housing together with other intermediate wall bases (39), the intermediate wall bases (39) preferably corresponding with each other in such a manner that they engage with each other and particularly preferably lock together with each other.

2. Battery module according to claim 1, **characterized in that** the intermediate wall (13) has an intermediate wall side wall (15) that is part of a side wall (6) of the battery module housing (2).

3. Battery module according to claim 1 or 2, **characterized in that** the intermediate wall (13) comprises holding elements to hold an adjacent battery cell (5), said holding elements being preferably at least parts of an intermediate wall side wall (15), an intermediate wall base (39) and/or a top side (90) of the intermediate wall (13).

4. Battery module according to any one of the preceding claims, **characterized in that** the electrolyte of the battery cells is preferably SO2-based.

5. Battery module according to any one of the preceding claims, **characterized in that** the plastic of the battery module housing parts is fiber-reinforced, preferably glass-fiber-reinforced and particularly preferably a glass-fiber-reinforced polyamide.

6. Battery module according to any one of the preceding claims, **characterized in that** the plastic of the battery module housing parts is thermoplastic, particularly the plastic of the intermediate wall (13).

7. Battery module according to any one of the preceding claims, **characterized in that** the thickness of the intermediate wall (13) is no more than 20 mm, preferably no more than 10 mm, further preferably no more than 7 mm, further preferably no more than 5 mm, particularly preferably no more than 4 mm and very preferably 3 mm.

8. Battery module according to any one of the preceding claims, **characterized in that** the recess (33) of the channel structure (32) in the intermediate wall (13) has a meander-type form and that the meander extends from a lower area of the intermediate wall (13) to an upper area of the intermediate wall (13).

9. Battery module according to any one of the preceding claims, **characterized in that** the recess (33) in the channel structure (32) extends over the entire thickness of the intermediate wall (13) and is open towards the two adjacent walls (7) of the battery cells (5).

10. Battery module according to any one of the preceding claims, **characterized in that** the thickness of the plastic separating layer (38) is no more than 20 %, preferably no more than 10 %, particularly preferably no more than 5 % of the thickness of the intermediate wall (13).

11. Battery module according to any one of the preceding claims, **characterized in that** the thickness of the plastic separating layer is no more than 1 mm, preferably no more than 0.5 mm, particularly preferably no more than 0.1 mm.

12. Battery module according to any one of the preceding claims, **characterized in that** a plurality of battery cells (5) and the intermediate walls (13) located between them are encompassed by a clamping device (3), preferably made of metal, which absorbs the forces exerted by the battery cells (5) during operation.

13. Battery module according to any one of the preceding claims, **characterized in that** the coolant inlet (11) and/or the coolant outlet (12) comprises a quick-action coupling (58) for simple connection without tools to an external cooling system.

14. Battery module according to any one of the preceding claims, **characterized in that** the battery module housing (2) has a top cover plate (48), which is located above the battery cells (5), being positioned transversely with respect to the side walls (9) of the battery module housing (2), and which has a filling connection opening (52) for an electrolyte filling connection (46) for filling the battery cells (5) with the electrolyte, said cover plate (48) having a trough-type recess (61) on its top side that adjoins the filling connection opening (52).

15. Battery module according to any one of the preceding claims, **characterized in that** the intermediate wall (13) has one intermediate wall side wall (15) each on its short side ends, which project at least partially beyond the small side walls (7b) of the cell housing (6) and which preferably form a battery module housing side wall (9) together with other intermediate wall side walls (15), the intermediate wall side walls (15) preferably corresponding with each other in such a manner that they engage in each other and particularly preferably lock together with each other.

16. Battery module according to any one of the preceding claims, **characterized in that** the intermediate wall base (39) forms the base of the battery module housing together with other intermediate wall bases (39), the intermediate wall bases (39) preferably corresponding with each other in such a manner that they engage with each other and particularly preferably lock together with each other.

17. Battery module according to any one of the preceding claims, **characterized in that**
- the battery module housing (2) has two end walls (8, 10), which are essentially arranged parallel to the larger side walls (7) of the battery cells (5);
- the end walls (8, 10) have a channel (31) that is open to their inner sides which is part of the channel structure (32);
and
- one end wall (8, 10) is the rear wall (10) and the other end wall (8, 10) the front wall (8) and the coolant inlet (11) and/or coolant outlet (12) is preferably located on the front wall (8).

18. Battery module according to claim 17, **characterized in that** the end walls (8, 10) have rib-like reinforcements (41) on their outer sides, which preferably comprise transverse and longitudinal struts.

19. Battery module according to claim 17, **characterized in that** the end wall (8, 10) comprises a closing wall (70) and an outer wall (71),
wherein
- the closing wall (70) has a channel (31) on its inner side that is open on one side which is part of the channel structure (32);
- the outer side of the closing wall (70) preferably has an essentially plane surface,
- the closing wall (70) preferably has a positioning element for fixing the relative position with respect to the outer wall (71) and/or the intermediate wall (13);
- the outer wall (71) preferably has oblong recesses (87) on its outer side and is preferably made of metal, particularly preferably of aluminum.

20. Use of the battery module according to any one of the preceding claims
- in a motor vehicle,
- for energy storage and energy feeding into a medium- and/or low-voltage network,
- for decentralized energy storage in combination with installations for exploiting renewable energies,
- as an uninterruptible power supply (UPS) or an emergency power supply; or
- for stabilization of isolated networks.

21. Motor vehicle with a battery module according to any one of the preceding claims 1 to 19.

## Revendications

1. Module de batterie doté d'un boîtier de module de batterie comportant des pièces en matière plastique et de plusieurs cellules de batterie prismatiques qui présentent un boîtier cellulaire comportant quatre parois latérales, deux parois latérales parallèles étant plus grandes que les deux autres parois latérales,
- le boîtier de module de batterie (2) comprenant un système de refroidissement avec une structure de canaux (32) et un agent réfrigérant fluide,
- la structure de canaux (32) étant en liaison fluidique avec une entrée d'agent réfrigérant (11) et une sortie d'agent réfrigérant (12) du boîtier de module de batteries (2),
- une paroi intermédiaire (13) en matière plastique étant agencée entre deux cellules de batterie voisines (5) parallèlement aux parois latérales de plus grande taille (7) de la cellule de batterie (5),
- un canal (31) de la structure de canaux (32) passant au moins en partie par la paroi intermédiaire (13) et étant formé au moyen d'un évidement (33) de la paroi intermédiaire (13) qui s'ouvre au moins sur une paroi latérale voisine (7) de la cellule de batterie (5),
- entre la paroi latérale (7) de la cellule de batterie (5) et la paroi intermédiaire (13) étant agencée une couche séparatrice en matière plastique (38) dont la matière est de préférence différente de celle de la paroi intermédiaire (13) et dont l'épaisseur est inférieure à celle de la paroi intermédiaire (13), de manière telle que le canal (31) du système de refroidissement formé par l'évidement (33) est fermé par la couche séparatrice en matière plastique (38),
- la paroi intermédiaire (13) comprenant un fond de paroi intermédiaire (39) qui fait saillie au moins en partie en dessous des cellules de batterie (5) et forme le fond du boîtier de module de batteries (2) de préférence conjointement avec d'autres fonds de paroi intermédiaire (39), les fonds de paroi intermédiaire (39) correspondant de préférence de telle sorte qu'ils s'engagent l'un dans l'autre et, de manière particulièrement préférentielle, s'encliquettent l'un avec l'autre.

2. Module de batterie selon la revendication 1, **caractérisé en ce que** la paroi intermédiaire (13) présente une paroi latérale de paroi intermédiaire (15) qui fait partie d'une paroi latérale (9) du boîtier de module de batteries (2).

3. Module de batterie selon la revendication 1 ou 2, **caractérisé en ce que** la paroi intermédiaire (13) comprend des éléments de maintien pour maintenir une cellule de batterie voisine (5), les éléments de maintien faisant préférentiellement au moins partie d'une paroi latérale de paroi intermédiaire (15), d'un fond de paroi intermédiaire (39) et/ou d'une face supérieure (90) de la paroi intermédiaire (13).

4. Module de batterie selon l'une des revendications précédentes, **caractérisé en ce que** l'électrolyte des cellules de batterie est préférentiellement à base de SO₂.

5. Module de batterie selon l'une des revendications précédentes, **caractérisé en ce que** la matière plastique des parties de boîtier de module de batterie est renforcé par fibres, préférentiellement renforcé par fibres de verre et est, de manière particulièrement préférentielle, un polyamide renforcé par fibres de verre.

6. Module de batterie selon l'une des revendications précédentes, **caractérisé en ce que** la matière plastique des parties de boîtier de module de batterie est thermoplastique, en particulier la matière plastique de la paroi intermédiaire (13).

7. Module de batterie selon l'une des revendications précédentes, **caractérisé en ce que** la paroi intermédiaire (13) présente une épaisseur de 20 mm au maximum, préférentiellement de 10 mm au maximum, de manière particulièrement préférentielle de 7 mm au maximum, de préférence encore de 5 mm au maximum, de manière particulièrement préférentielle de 4 mm au maximum et très préférentiellement de 3 mm.

8. Module de batterie selon l'une des revendications précédentes, **caractérisé en ce que** l'évidement (33) de la structure de canaux (32) de la paroi intermédiaire (13) est réalisé en forme de méandre et **en ce que** le méandre va d'une zone inférieure de la paroi intermédiaire (13) jusqu'à une zone supérieure de la paroi intermédiaire (13).

9. Module de batterie selon l'une des revendications précédentes, **caractérisé en ce que** l'évidement (33) de la structure de canaux (32) s'étend sur l'ensemble de l'épaisseur de la paroi intermédiaire (13) et s'ouvre sur les deux parois latérales voisines (7) des cellules de batterie (5).

10. Module de batterie selon l'une des revendications précédentes, **caractérisé en ce que** l'épaisseur de la couche séparatrice en matière plastique (38) présente une épaisseur correspondant au maximum à 20 %, préférentiellement au maximum à 10 %, de manière particulièrement préférentielle au maximum 5 % de l'épaisseur de la paroi intermédiaire (13).

11. Module de batterie selon l'une des revendications précédentes, **caractérisé en ce que** la couche séparatrice en matière plastique présente une épaisseur de 1 mm au maximum, préférentiellement de 0,5 mm au maximum et très préférentiellement de 0,1 mm au maximum.

12. Module de batterie selon l'une des revendications précédentes, **caractérisé en ce que** plusieurs cellules de batterie (5) et les parois intermédiaires intercalées (13) sont entourées par un dispositif de serrage (3), de préférence en métal, qui absorbe en service des forces exercées par les cellules de batterie (5).

13. Module de batterie selon l'une des revendications précédentes, **caractérisé en ce que** l'entrée d'agent réfrigérant (11) et/ou la sortie d'agent réfrigérant (12) comporte un raccord rapide (58) pour un raccordement simple et réalisé sans outil à un système de refroidissement externe.

14. Module de batterie selon l'une des revendications précédentes, **caractérisé en ce que** le boîtier de module de batterie (2) comporte une plaque de recouvrement supérieure (48) qui est située au-dessus des cellules de batterie (5) transversalement par rapport aux parois latérales (9) du boîtier de module de batteries (2) et qui comporte une ouverture de raccord de remplissage (52) pour un raccord de remplissage d'électrolyte (46) pour remplir les cellules de batterie (5) avec l'électrolyte la plaque de recouvrement (48) présentant, sur sa face supérieure, une cavité en forme de cuvette (61) adjacente à l'ouverture de raccord de remplissage (52).

15. Module de batterie selon l'une des revendications précédentes, **caractérisé en ce que** la paroi intermédiaire (13) présente, sur ses faces frontales latérales courtes, respectivement une paroi latérale de paroi intermédiaire (15) qui fait au moins partiellement saillie par rapport aux petites parois latérales (7b) du boîtier cellulaire (6) et qui forme, préférentiellement conjointement avec d'autres parois latérales de parois intermédiaires (15), une paroi latérale de boîtier de module de batterie (9), les parois latérales de parois intermédiaires (15) correspondant l'une avec l'autre préférentiellement de manière telle qu'elles s'engagent l'une dans l'autre et, de manière particulièrement préférentielle, s'encliquettent l'une avec l'autre.

16. Module de batterie selon l'une des revendications précédentes, **caractérisé en ce que** le fond de paroi intermédiaire (39) forme le fond du boîtier de module de batteries (2) conjointement avec d'autres fonds de paroi intermédiaire (39), les fonds de paroi intermédiaire (39) correspondant préférentiellement de manière telle qu'ils s'engagent l'un dans l'autre et, de manière particulièrement préférentielle, s'encliquettent l'un avec l'autre.

17. Module de batterie selon l'une des revendications précédentes, **caractérisé en ce que**
- le boîtier de module de batterie (12) comprend deux parois terminales (8, 10) qui sont agencées sensiblement parallèlement aux parois latérales de plus grande taille (7) des cellules de batterie (5),
- les parois terminales (8, 10) présentent un canal (31) qui est ouvert sur leurs faces intérieures et qui fait partie de la structure de canaux (32),
- une paroi terminale (8, 10) est la paroi arrière (10) et l'autre paroi terminale (8, 10) est la paroi avant (8) et l'entrée d'agent réfrigérant (11) et/ou la sortie d'agent réfrigérant (12) sont préférentiellement agencées sur la paroi avant (8).

18. Module de batterie selon la revendication 17, **caractérisé en ce que** les parois terminales (8, 10) comportent, sur leurs faces extérieures, des renforcements (41) de type nervure qui comprennent préférentiellement des entretoises transversales et longitudinales.

19. Module de batterie selon la revendication 17, **caractérisé en ce que** la paroi terminale (8, 10) comprend une paroi d'extrémité (70) et une paroi extérieure (71),
- la paroi d'extrémité (70) comportant, sur sa face intérieure, un canal (31) ouvert d'un côté et faisant partie de la structure de canaux (32);
- la face extérieure de la paroi d'extrémité (70) étant préférentiellement sensiblement plane,
- la paroi d'extrémité (70) comportant préférentiellement un élément de positionnement pour fixer la position relative par rapport à la paroi extérieure (71) et/ou à la paroi intermédiaire (13),
- la paroi extérieure (71) comportant, sur sa face extérieure, des évidements (87) préférentiellement allongés et étant préférentiellement composée de métal, de manière particulièrement préférentielle d'aluminium.

20. Utilisation du module de batteries selon l'une des revendications précédentes
- dans un véhicule,
- pour le stockage d'énergie et son injection dans le réseau moyenne et/ou basse tension,
- pour le stockage d'énergie décentralisé en combinaison avec des installations d'obtention d'énergies renouvelables,
- en tant qu'alimentation électrique sans interruption (USV) ou alimentation électrique de secours ou
- pour la stabilisation de réseaux en ilôtage.

21. Véhicule comprenant un module de batterie selon l'une des revendications précédentes 1 à 19.
